(19) Europäisches Patentamt
European Patent Office
Office européen des brevets

(11) **EP 3 120 428 B1**

(12) **EUROPÄISCHE PATENTSCHRIFT**

(45) Veröffentlichungstag und Bekanntmachung des Hinweises auf die Patenterteilung:
**09.05.2018 Patentblatt 2018/19**

(21) Anmeldenummer: **15711047.9**

(22) Anmeldetag: **16.03.2015**

(51) Int Cl.:
*H01S 3/13* (2006.01)          *H01S 3/00* (2006.01)
*H01S 3/10* (2006.01)          *H01S 3/083* (2006.01)
*H01S 3/081* (2006.01)          *H01S 3/106* (2006.01)
*H01S 3/107* (2006.01)          *H01S 3/11* (2006.01)
*H01S 3/16* (2006.01)          *H01S 3/067* (2006.01)
*H01S 3/08* (2006.01)          *H01S 3/139* (2006.01)

(86) Internationale Anmeldenummer:
**PCT/EP2015/000578**

(87) Internationale Veröffentlichungsnummer:
**WO 2015/139829 (24.09.2015 Gazette 2015/38)**

(54) **VERFAHREN ZUM BETREIBEN EINER LASEREINRICHTUNG, RESONATORANORDNUNG UND VERWENDUNG EINES PHASENSCHIEBERS**

METHOD FOR OPERATING A LASER DEVICE, RESONATOR ARRANGEMENT AND USE OF A PHASE SHIFTER

PROCÉDÉ POUR FAIRE FONCTIONNER UN DISPOSITIF LASER, DISPOSITIF RÉSONATEUR ET UTILISATION D'UN DÉPHASEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.03.2014 DE 102014204941**

(43) Veröffentlichungstag der Anmeldung:
**25.01.2017 Patentblatt 2017/04**

(73) Patentinhaber: Menlo Systems GmbH
**82152 Martinsried (DE)**

(72) Erfinder:
• HÄNSEL, Wolfgang
81369 München (DE)
• STEINMETZ, Tilo
80797 München (DE)
• FISCHER, Marc
80636 München (DE)
• LEZIUS, Matthias
85716 Unterschleissheim (DE)
• HOLZWARTH, Ronald
82194 Gröbenzell (DE)

(74) Vertreter: **Grünecker Patent- und Rechtsanwälte PartG mbB**
**Leopoldstraße 4**
**80802 München (DE)**

(56) Entgegenhaltungen:
**EP-A1- 2 178 180     US-A1- 2004 213 302**

• **HUDSON D D ET AL: "MODE-LOCKED FIBER LASER FREQUENCY-CONTROLLED WITH AN INTRACAVITY ELECTRO-OPTIC MODULATOR", OPTICS LETTERS, OPTICAL SOCIETY OF AMERICA, US, Bd. 30, Nr. 21, 1. November 2005 (2005-11-01), Seiten 2948-2950, XP001235463, ISSN: 0146-9592, DOI: 10.1364/OL.30.002948**
• **XULING SHEN ET AL: "Electronic control of nonlinear-polarization-rotation mode locking in Yb-doped fiber lasers", OPTICS LETTERS, OPTICAL SOCIETY OF AMERICA, US, Bd. 37, Nr. 16, 15. August 2012 (2012-08-15), Seiten 3426-3428, XP001577624, ISSN: 0146-9592, DOI: 10.1364/OL.37.003426 [gefunden am 2012-08-10]**

**Beschreibung**

Die Erfindung betrifft ein Verfahren zum Betreiben einer Lasereinrichtung bzw. das Gebiet der optischen Resonatoranordnungen. Besonders vorteilhaft lässt sich die vorliegende Erfindung zum Erzeugen bzw. fein Einstellen von Frequenzkämmen nutzen. Ebenfalls besonders vorteilhaft ist die Nutzung der Erfindung in Verbindung mit dem Erzeugen kurzer bzw. ultrakurzer Laserpulse. Z.B. können die betreffenden Laserpulse Pulsdauern im Bereich von Pikosekunden oder Femtosekunden aufweisen. Es sind allerdings auch andere Pulsdauern, z.b. größere oder kleinere Pulsdauern, denkbar. Auch Pulsdauern im Bereich von Femto- bis zu Nanosekunden sind vorteilhaft.

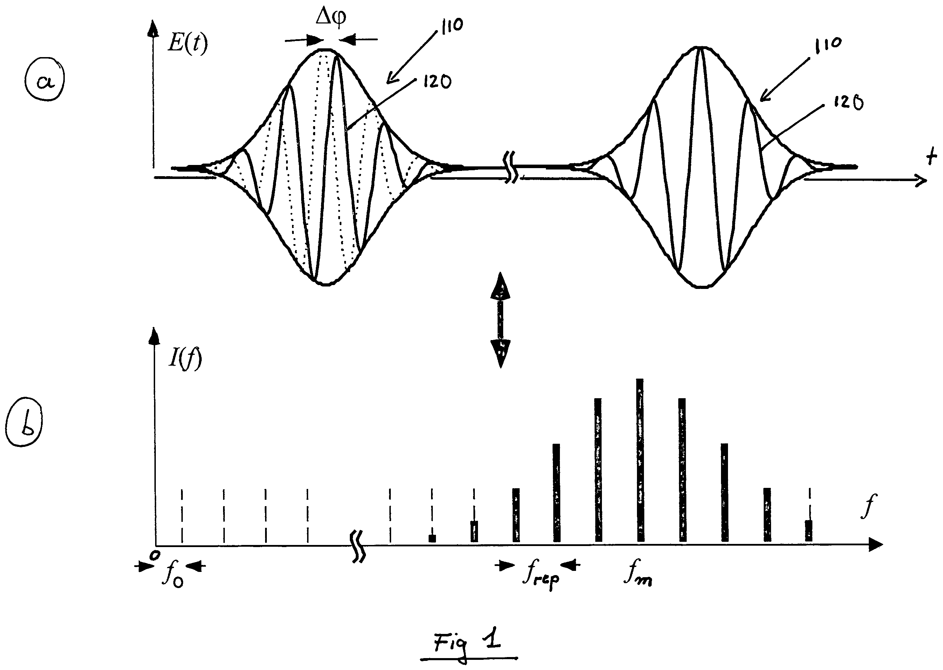

Figur 1a zeigt Laserpulse in einer Auftragung des elektrischen Feldes gegen die Zeit. Dabei ist sowohl die Einhüllende des Laserpulses 110 als auch die Trägerwelle 120 des Laserpulses 110 gezeigt. Die Trägerwelle 120 ist durch eine sinusartige Schwingung im Bereich optischer Frequenzen darstellbar.

Figur 1b zeigt den zu den Laserpulsen 110 aus Figur 1a zugehörigen Frequenzkamm. Dieser Frequenzkamm weist eine Vielzahl von Lasermoden $f_m$ mit einem Abstand $f_{rep}$ voneinander auf. $f_{rep}$ ist dabei der Abstand benachbarter Moden des Frequenzkamms zueinander. Die Moden $f_m$ des Frequenzkamms lassen sich durch folgende Formel beschreiben:

$$f_m = m \times f_{rep} + f_0.$$

Dabei ist m eine natürliche Zahl. Selbstverständlich erstrecken sich die Moden eines realen Frequenzkamms über eine endliche Breite im Frequenzraum auf. Der Parameter $f_0$ des Frequenzkamms wird im Folgenden als Offset-Frequenz des Frequenzkamms bezeichnet. Das Vorhandensein dieser Offset-Frequenz $f_0$ führt dazu, dass die Frequenzen der Lasermoden $f_m$ keine Vielfachen voneinander sind. Um die Moden $f_m$ eines Frequenzkamms einzustellen oder anderweitig zu kontrollieren, ist es vorteilhaft, wenn der Abstand benachbarter Moden zueinander, $f_{rep}$, und/oder die Offset-Frequenz $f_0$ einstellbar ist.

Die vorliegende Erfindung erlaubt es, insbesondere die Offset-Frequenz $f_0$ eines zu einem Laserpuls korrespondierenden Frequenzkamms in einem Resonator einzustellen oder zu regeln. Dabei kann auf besonders vorteilhafte Weise die Regelung derart erfolgen, dass der Modenabstand $f_{rep}$ dabei nicht beeinflusst wird. Bei bisher bekannten Methoden zum Einstellen der Moden eines Frequenzkamms wurde meist bei Verändern eines einzelnen einstellbaren Parameters jeweils sowohl der Abstand der Lasermoden zueinander, als auch die Offset-Frequenz beeinflusst.

Die Frequenzstabilisierung von Frequenzkammgeneratoren unter Verwendung hochfrequenter Schwebungssignale wird in der DE 100 44 404 A1, der DE 10 2005 035 173 A1 und der DE 199 11 103 B4 sowie in der EP 1 372 275 B1 beschrieben. Als Frequenzkammgenerator ist dort jeweils ein Kurzpuls- oder Ultrakurzpuls-Oszillator vorgesehen, d.h. ein modengekoppelter Laser mit Pulsdauern im Bereich von Femto- (fs) bis zu Nanosekunden (ns). Führt man eine Fourier-Transformation vom Zeitraum in den Frequenzraum durch, entspricht der Folge von Laserpulsen im Frequenzraum ein "Frequenzkamm". Er setzt sich zusammen aus einer Vielzahl von scharfen δ-ähnlichen Funktionen bei verschiedenen diskreten Frequenzen, Moden $f_m$ genannt. Benachbarte Moden haben voneinander einen Abstand $f_{rep}$, der genau der Pulswiederholfrequenz (= Repetitionsrate) des Oszillators entspricht und der daher durch die optische Weglänge der Pulse im Oszillator bestimmt ist.

Allerdings liegen die Moden des Frequenzkamms im Normalfall nicht exakt bei einem ganzzahligen Vielfachen von Δf, sondern der gesamte Frequenzkamm ist um eine so genannte Offset-Frequenz $f_0$ verschoben. Rechnerisch lässt sich der Frequenzkamm daher beschreiben als $f_m = m \times f_{rep} + f_0$. Die Ursache für die Offset-Frequenz $f_0$ besteht darin, dass sich die Gruppengeschwindigkeit für die im Oszillator umlaufenden Pulse, die die Repetitionsrate und damit den Modenabstand $f_{rep}$ bestimmt, von der Phasengeschwindigkeit der einzelnen Moden unterscheidet.

In der DE 199 11 103 A1, der EP 1 161 782 B1 und der DE 100 44 404 C2 sind Verfahren beschrieben, wie die beiden Freiheitsgrade des Frequenzkamms, d.h. die Offset-Frequenz $f_0$ und der Modenabstand $f_{rep}$, auf feste Werte fixiert bzw. eingestellt werden können. Zu diesem Zweck ist je ein Stabilisator oder Regelkreis vorgesehen. Ein erster Stabilisator betrifft den Modenabstand. Als Messwert für diesen Stabilisator kann die (ggf. in besser erfassbare Bereiche geteilte oder multiplizierte) Pulswiederholfrequenz dienen, die - wie erläutert - dem Modenabstand entspricht. Eine Auswerte- und Vergleichseinheit vergleicht den gemessenen Wert mit einem vorgegebenen Referenzwert für die Pulswiederholfrequenz. Um den Modenabstand zu verändern oder um ihn bei festgestellter Abweichung auf den vorgegebenen Referenzwert einzustellen, steuert der Stabilisator ein Stellglied an, das die optische Weglänge des Oszillators und damit die Pulswiederholfrequenz ändert. Beispielsweise kann das Stellglied ein Linearantrieb oder ein elektrooptisches Element oder ein Piezoaktuator für einen Resonatorspiegel des Oszillators sein.

Ein zweiter Stabilisator regelt die Offset-Frequenz $f_0$ auf einen bestimmten Wert. Zu diesem Zweck wird eine bestimmte Mode $f_m$ des Frequenzkamms auf einem Detektor (z.B. einer Photodiode oder einem Photomultiplier) entweder mit einer externen, exakt bekannten Referenzfrequenz (z.B. von einem Dauerstrich-Laser) oder mit einer frequenzverdoppelten Mode aus dem gleichen Frequenzkamm überlagert. Die Überlagerung erzeugt auf dem Detektor eine Schwebungsfrequenz im Radiofrequenzbereich. Eine Auswerte- und Vergleichseinheit vergleicht die Schwebungsfrequenz mit einer vorgegebenen, ggf. variabel einstellbaren Referenzfrequenz. Stellt sich dabei eine Abweichung heraus, steuert der zweite Stabilisator ein Stellglied, das den Unterschied zwischen Phasen- und Gruppenlaufzeit im Oszillator verändert. Geschehen kann dies beispielsweise, indem ein Resonatorendspiegel in einem von den Moden räumlich getrennt durchlaufenen Resonatorzweig leicht verkippt wird, um die optische Weglänge des Oszillators frequenzabhängig zu ändern. Alternativ könnten die Oszillatorverluste verändert werden, z.B. durch einen Intensitätsmodulator, oder indem die Pumpleistung für den Oszillator verändert oder ein dispersives Element wie ein Prismenpaar oder eine transparente, kippbare Platte in den Strahlengang des Oszillators eingeführt und in seiner Lage verändert werden.

Mit den in der DE 199 11 103 A1, der EP 1 161 782 B1 oder der DE 100 44 404 C2 beschriebenen Mitteln wird insgesamt ein vollständig stabilisierter Frequenzkamm erzeugt, dessen einzelne Moden bei exakt bekannten Frequenzen liegen und zueinander kohärent sind. Hinsichtlich der detaillierten Beschreibung dieser Mittel wird auf die drei genannten Dokumente verwiesen.

Die US 2004/0213302 A1 offenbart das Einstellen der Pulswiederholungsrate und der Offset-Frequenz eines mit einem faserbasierten Oszillator bereitgestellten Frequenzkamms basierend auf einem mittels eines Interferometers erzeugten Schwebungssignal. Die Lage der Offset-Frequenz soll mittels eines Bragg-Gitters einstellbar sein. Gemäß einer Version soll das Gitter mittels eines Heizelements beheizbar sein. Gemäß einer anderen Version soll über ein piezoelektrisches Element Druck auf das Gitter ausgeübt werden. Durch Ändern der Temperatur des Bragg-Gitters oder Ändern des Drucks aufs Bragg-Gitter soll jeweils ein Phasenversatz des umlaufenden Laserlichts erzeugt werden und so auf die Offset-Frequenz eingewirkt werden.

Aus dem Artikel "Mode-locked fiber laser frequency-controlled with an intracavity electro-optic modulator" (OPTICS LETTERS, Vol. 30, No. 21) von D. Hudson et al. ist es bekannt, einen elektrooptischen Modulator (EOM) innerhalb eines Resonators zum Einstellen der Freiheitsgrade eines Frequenzkamms einzusetzen. Durch eine Veränderung des Brechungsindex des EOM kann der Abstand der Moden des Frequenzkamms voneinander verändert werden, da eine solche Veränderung des Brechungsindex analog zu einer Veränderung der Resonatorlänge ist. Mit dem EOM kann zudem die Offset-Frequenz des Frequenzkamms eingestellt werden. In diesem Fall kann ein für die Phasengeschwindigkeit des Laserlichts relevanter Brechungsindex mittels eines Gleichstroms an dem EOM eingestellt werden und ein für die Gruppengeschwindigkeit relevanter Brechungsindex mittels eines Wechselstroms an dem EOM-Kristall eingestellt werden.

Der Artikel "Electronic control of nonlinear-polarization-rotation mode locking in Yb-doped fiber lasers" (OPTICS LETTERS, Vol. 37, No. 16) von X. Shen et al. beschreibt einen Faserlaser zum Erzeugen eines Frequenzkamms. Das Mode-locking in dem Laser wird über nonlinear-polarization-rotation (NPR) erreicht. In dem Resonator ist ein electronic polarization controller (EPC) in Form eines fiber squeezers vorgesehen, um Einfluss auf die NPR-Eigenschaften zu haben und so ein mode locking im Resonator zu unterstützen. Es wird angeregt, dass der EPC auch zum Beeinflussen der Offset-Frequenz verwendet werden kann. Hierzu wird durch Anlegen einer Spannung an den EPC durch eine Polarisationsveränderung in Verbindung mit der Nichtlinearität des NPR-Lasers die Offset-Frequenz verändert.

Nachteilig an am Stand der Technik ist, dass bei herkömmlichen Methoden das Verstellen der Offsetfrequenz nur über einen vergleichsweise kleinen Bereich funktioniert.

Die Aufgabe der Erfindung ist es, ein Verfahren und eine optische Anordnung zur Verfügung zu stellen, mit denen das präzise Verstellen und Einstellen der Offsetfrequenz über einen größeren Frequenzbereich ermöglicht wird.

Diese Aufgabe wird gelöst durch ein Verfahren mit den Merkmalen des Anspruchs 1, durch eine Resonatoranordnung mit den Merkmalen der Ansprüche 6 oder 7 bzw. durch die Verwendung eines Phasenschiebers gemäß Anspruch 23.

Im Folgenden soll die Funktion der vorliegenden Erfindung beschrieben werden.

Es ist bekannt, dass in Materie die Gruppenlaufzeit, mit der sich z.B. die Einhüllende eines Laserpulses ausbreitet, und die Phasenlaufzeit, mit der sich z.B. die Trägerwelle des Laserpulses ausbreitet, unterschiedlich sind. Dies hat zur Folge, dass sich in dem Fall eines in einem Resonator umlaufenden Laserpulses pro Umlauf ein Phasenschlupf $\Delta\varphi$ zwischen der Trägerwelle des Laserpulses und der Einhüllenden eines Laserpulses einstellt. Dieser Phasenschlupf $\Delta\varphi$ ist z.B. in Figur 1a gezeigt. Auch allgemein für Laserlicht ist ein solcher Phasenschlupf definiert.

Die folgenden Ausführungsformen sind jeweils, auch wenn nicht explizit angemerkt, sowohl allgemein für in einem Resonator umlaufendes Laserlicht, als auch für Laserpulse anwendbar.

Für einen in einem Resonator umlaufenden Laserpuls besteht ein Zusammenhang des Phasenschlupfes pro Umlauf in dem Resonator mit der Offset-Frequenz $f_0$ des zugehörigen Frequenzkamms. Dieser Zusammenhang lässt sich durch die Formel

$$f_0 = \Delta\varphi/(2\,\pi\,T_{Umlauf})$$

darstellen. $T_{Umlauf}$ ist dabei die Zeit, die der Laserpuls für einen Umlauf in dem Resonator benötigt. Damit kann also die Offset-Frequenz durch Verändern des Phasenschlupfes eingestellt werden. Dies geschieht nun bei der vorliegenden Erfindung auf eine neue und besonders vorteilhafte Art und Weise.

In einem erfindungsgemäßen Verfahren bzw. Resonator ist ein einstellbarer Phasenschieber vorhanden. Bei Durchlaufen des Phasenschiebers wird der Trägerwelle eines in dem Resonator umlaufenden Laserpulses eine geometrische Phase aufgeprägt, insbesondere ohne dass sich die Gruppenverzögerung ändert. Dadurch verändert sich der Phasenschlupf zwischen der Trägerwelle und der Einhüllenden des Pulses pro Umlauf.

Wird nun die geometrische Phase, die der Trägerwelle eines im Resonator umlaufenden Laserpulses pro Resonatorumlauf aufgeprägt wird, verändert, so wird dadurch auch die Offset-Frequenz $f_0$ des zugehörigen Frequenzkamms verändert. Damit ist durch die erfindungsgemäße Einstellbarkeit der geometrischen Phase die Offset-Frequenz $f_0$ eines Frequenzkamms einstellbar oder regelbar.

Eine Möglichkeit, die geometrische Phase, die der Trägerwelle des Laserpulses pro Resonatorumlauf aufgeprägt wird, zu verändern, wird nun anhand einer besonders vorteilhaften Möglichkeit dargestellt.

Gemäß mehreren Ausführungsformen der vorliegenden Erfindung wird die geometrische Phase, die einer in einem Resonator umlaufenden Trägerwelle eines Laserpulses aufgeprägt wird, durch Verändern der Orientierung oder auch anderer Eigenschaften eines doppelbrechenden und/oder eines polarisierenden Elements in dem Resonator realisiert. Es wird also die Polarisation des Laserpulses geändert. Wie allgemein bekannt, siehe dazu z.B. Bergmann Schäfer, Lehrbuch der Experimentalphysik, Band 2, 8. Auflage "Elektromagnetismus", Seiten 418 ff, lassen sich Polarisationszustände von Licht auf der sog. Poincaré-Kugel darstellen.

Einem Lichtstrahl, dessen Polarisation auf eine bestimmte Art und Weise verändert wird, wird dabei eine geometrische Phase aufgeprägt. Besonders vorteilhaft kann es dabei sein, wenn die Polarisation des Lichtstrahls einen geschlossenen Weg auf der Poincaré-Kugel zurücklegt. Weiter vorteilhaft kann es sein, wenn die Polarisation den geschlossenen Weg auf Poincaré-Kugel durch verschiedene unitäre Operationen zurücklegt. Es sind allerdings auch andere Wege auf der Poincaré-Kugel möglich, die zu dem Aufprägen einer geometrischen Phase führen.

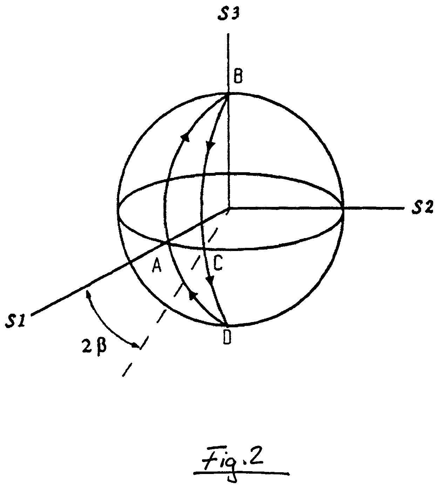

Figur 2 zeigt eine Poincaré-Kugel für den Polarisationszustand eines Laserpulses. Zustände, die auf dem Äquator der Poincare-Kugel liegen (z.B. die Punkte A und C in Figur 2) weisen eine lineare Polarisation auf. Die Position des Punktes auf dem Äquator der Poincaré-Kugel gibt die Richtung der linearen Polarisation an. An den Polen gelegene Punkte der Poincare-Kugel (Punkte B und D in Figur 2) geben die beiden zirkularen Polarisationszustände an (rechtszirkular und linkszirkular). In Figur 2 ist eine Veränderung des Polarisationszustandes eines Laserpulses gezeigt, die zum Aufprägen einer geometrischen Phase auf die Trägerwelle des Laserpulses führt. Im Anfangszustand A ist der Laserpuls linear polarisiert. Ausgehend davon wird er in eine zirkulare Polarisation übergeführt (Punkt B). Davon ausgehend wird die Polarisation wiederum zu einer linearen Polarisation, allerdings verschieden von der Anfangspolarisation A gemacht (Punkt C). Ausgehend von dieser zweiten linearen Polarisation an Punkt C wird die Polarisation des Laserpulses in eine der ersten zirkularen Polarisation (an Punkt B) entgegengesetzte zweite zirkulare Polarisation (an Punkt D) übergeführt. Von dort aus wird die Polarisation des Laserpulses wiederum in den linear polarisierten Anfangszustand an Punkt A übergeführt. Bei Durchlauf dieses Polarisationsweges sammelt die Trägerwelle des Laserpulses eine geometrische Phase auf.

Bezüglich monochromatischem Licht außerhalb eines Resonators ist dieser Effekt des Aufsammelns einer geometrischen Phase bei Durchlaufen bestimmter Polarisationszustände unter der Bezeichnung Pancharatnam-Phase bekannt.

Wie z.B. der Veröffentlichung T.H. Chyba et al., Optics Letters Vol 13 No. 7 p. 562 "Measurement of the Pancharatnam phase for a light beam" zu entnehmen (hier allerdings nur für monochromatisches Licht), ist die aufgenommene Pancharatnam-Phase von dem auf der Poincaré-Kugel zurückgelegten Weg abhängig. Insbesondere ist die aufgenommene geometrische Phase von der auf der Oberfläche der Poincaré-Kugel von dem zurückgelegten Weg eingeschlossenen Fläche abhängig. Damit kann durch ein Verändern des Wegs auf der Poincaré-Kugel, also durch ein Verändern bestimmter Polarisationszustände des Lichts die aufgenommene geometrische Phase verändert werden.

Ermöglicht durch die oben beschriebenen physikalischen Effekte wird erfindungsgemäß ein Verfahren zum Betreiben einer Lasereinrichtung bereitgestellt. Das Verfahren umfasst den Schritt des Bereitstellens eines modengekoppelten Laserpulses in einem Resonator, sodass der Laserpuls in dem Resonator umläuft. Weiterhin umfasst das Verfahren das Bestimmen einer Offset-Frequenz $f_0$ des zu dem Laserpuls korrespondierenden Frequenzkamms, wobei der Frequenzkamm eine Vielzahl von Lasermoden $f_m$ mit einem Abstand $f_{rep}$ voneinander aufweist, deren Frequenzen durch die Formel $f_m = m * f_{rep} + f_0$ beschrieben werden können. $f_m$, $f_{rep}$ und $f_0$ sind dabei Frequenzen und können z.B. in Hertz angegeben werden. m ist eine natürliche Zahl. Dabei kann m auch 0 sein. Das erfindungsgemäße Verfahren umfasst weiterhin das Verändern der Offset-Frequenz $f_0$ durch das Verändern der geometrischen Phase, die der Trägerwelle des Laserpulses pro Umlauf im Resonator eine Phasenverzögerung im Vergleich zum unveränderten Zustand aufprägt.

Auf besonders vorteilhafte Art und Weise kann das Verändern der geometrischen Phase derart erfolgen, dass die Gruppenumlaufzeit des Laserpulses $T = 1/f_{rep}$ in dem Resonator dadurch nicht verändert wird. In einem für einige Anwendungen idealen Fall kann dabei die Gruppenumlaufzeit des Laserpulses in dem Resonator völlig konstant bleiben. Es ist dem Fachmann allerdings klar, dass dies in realistischen Anwendungen normalerweise nicht exakt erreicht wird. Im Sinne der vorliegenden Anmeldung ist das Merkmal, dass die Gruppenumlaufzeit des Laserpulses in dem Resonator nicht verändert wird, so zu verstehen, dass die Gruppenumlaufzeit des Laserpulses in dem Resonator entweder exakt konstant bleibt, oder sich um weniger als 0,1%, um weniger als 0,5%, um weniger als 1%, um weniger als 2%, um weniger als 5%, um weniger als 10% oder um weniger als 20% verändert. Da der Abstand $f_{rep}$ der Lasermoden voneinander im Zusammenhang steht mit der Gruppenumlaufzeit des Laserpulses in dem Resonator, kann damit auch $f_{rep}$ im obigen Sinne konstant sein oder nicht wesentlich verändert werden bei Verändern der geometrischen Phase der Trägerwelle des Laserpulses. Vorteilhafterweise, aber nicht notwendigerweise, kann das Verändern der geometrischen Phase durch Verändern der Orientierung eines doppelbrechenden oder eines polarisierenden Elements erreicht werden. Dabei kann das doppelbrechende oder das polarisierende Element in dem Resonator vorgesehen sein. Insbesondere kann durch Rotation eines doppelbrechenden oder polarisierenden Elements um seine eigene Achse oder die optische Achse des Resonators die geometrische Phase, die der Trägerwelle eines im Resonator umlaufenden Laserpulses pro Resonatorumlauf eine Phasenverzögerung aufprägt, verändert werden. Um die dem Laserpuls aufgeprägte geometrische Phase zu verändern, bzw. um sie einzustellen, sind selbstverständlich auch andere Methoden anwendbar. Insbesondere sind andere Methoden anwendbar, um den Polarisationszustand der Laserpulse zu verändern und so die Offset-Frequenz $f_0$ des zugehörigen Frequenzkamms einzustellen und zu verändern.

Eine besonders vielseitig anwendbare Ausführungsform des erfindungsgemäßen Verfahrens ist ein Regelverfahren zum Regeln der Offset-Frequenz eines Frequenzkamms. Dazu wird der Schritt des Bestimmens der Offset-Frequenz $f_0$ des in dem Resonator umlaufenden Laserpulses mehrmals durchgeführt. Z.B. kann dieser Schritt in festen Abständen kontinuierlich durchgeführt werden. Das Bestimmen der Offset-Frequenz kann eine Messung umfassen. Eine solche Messung kann z.B. eine absolute Messung von $f_0$ umfassen. Dies ist allerdings nicht notwendig. Es ist auch möglich, dass das Bestimmen der Offset-Frequenz $f_0$ eine Messung der Lage des Frequenzkamms in Bezug auf einen anderen Laser oder einen weiteren Frequenzkamm umfasst. Es kann auf diese Weise z.B. eine absolute oder eine relative Bestimmung der Lage der Frequenzkammmoden $f_m$ durchgeführt werden. Basierend auf der zuletzt gemessenen Offset-Frequenz $f_0$ kann die geometrische Phase, die der Trägerwelle des Laserpulses die Phasenverzögerung aufprägt pro Resonatorumlauf aufprägt, verändert werden. Insbesondere kann die Art der Veränderung der Orientierung des doppelbrechenden und/oder des polarisierenden Elements durch die zuletzt gemessene Offset-Frequenz $f_0$ bestimmt werden. Durch mehrmaliges hintereinander Ausführen der Schritte des Bestimmens der Offset-Frequenz und des Veränderns der Offset-Frequenz durch Verändern der geometrischen Phase kann ein Regelungsverfahren für die Offset-Frequenz bereitgestellt werden.

Vor Auftreffen des Laserpulses auf das doppelbrechende und/oder das polarisierende Element kann die Polarisation des Laserpulses zu einer elliptischen oder zirkularen Polarisation gemacht werden. Besonders vorteilhaft ist eine zirkulare Polarisation am Ort des doppelbrechenden Elementes, da sich dann durch die Orientierungsänderung der Doppelbrechung keine Verzögerung der Gruppenumlaufzeit ergibt. So kann z.B. der in Figur 2 gezeigte Weg auf der Poincaré-Kugel realisiert werden.

Es können sowohl lediglich ein, als auch mehrere (z.B. 2, 3, 4 oder 10) einstellbare doppelbrechende oder polarisierende Elemente vorgesehen sein.

Die Erfindung betrifft weiterhin eine Resonatoranordnung zur Aufnahme oder Erzeugung von Laserpulsen. Die Resonatoranordnung umfasst einen Resonator, in dem die Laserpulse umlaufen können. Weiterhin kann ein aktives Medium zum Verstärken der Laserstrahlung in dem Resonator vorgesehen sein. Darüber hinaus kann ein Element, das geeignet ist die Modenkopplung herbeizuführen, im Resonator vorhanden sein. Zum Auskoppeln von Laserpulsen aus der Resonatoranordnung kann eine Auskoppeleinrichtung vorgesehen sein. Insbesondere kann es sich dabei um einen Auskoppelspiegel handeln.

Der erfindungsgemäße Phasenschieber in seiner Funktion als Offsetschieber kann in alle modengekoppelten Laser eingebaut werden. Insbesondere sind dies klassische festkörperbasierte (z.B.Ti:Sa) fs-Laser, wie sie bereits lange bekannt sind. Dabei kann der Laserresonator sowohl die Form eines linearen Resonators annehmen, als auch die Form eines Ringresonators. Auch die Repetitionsrate kann je nach Anwendungsfeld erheblich schwanken. Sie kann z.B. zwischen 10 MHz und 10 GHz liegen.

Es kann z.B. ein Ti:Sa Laser verwendet werden. Auch andere Laserkristalle, wie z.B. Er Glas, Yb:YAG, Cr:LiSAF Cr:Forsterite etc können verwendet werden. Die Dispersionskompensation in solchen Lasern erfolgt vorteilhaft über sogenannte gechirpte oder double gechripte Spiegel.

Die Resonatoranordnung umfasst eine Messeinrichtung zum Bestimmen der Offset-Frequenz $f_0$ des zu den Laserpulsen korrespondierenden Frequenzkamms, wobei die Frequenzen der Moden $f_m$ des Frequenzkamms wiederum durch die Formel $f_m = m * f_{rep} + f_0$ beschrieben werden können. Innerhalb des Resonators ist zumindest ein in seiner Orientierung veränderliches doppelbrechendes oder polarisierendes Element derart angeordnet, dass bei einer Veränderung der Orientierung des zumindest einen doppelbrechenden oder polarisierenden Elements die geometrische Phase, die der Trägerwelle eines im Resonator umlaufenden Laserpulses pro Resonatorumlauf eine Phasenverzögerung aufprägt, veränderlich ist. Dadurch ist die Offset-Frequenz $f_0$ des zu dem Laserpuls gehörenden Frequenzkamms veränderlich.

Die im vorangehenden Absatz beschriebene Resonatoranordnung ist zum Durchführen des oben beschriebenen Verfahrens zum Betreiben einer Lasereinrichtung geeignet.

In einer anderen Ausführungsform ist eine aktive oder passive Resonatoranordnung mit einem Resonator zur Aufnahme von Laserstrahlung vorgesehen. Insbesondere können auch Laserpulse aufgenommen werden. In dem Resonator ist mindestens ein einstellbares, doppelbrechendes oder polarisierendes Element angeordnet. Wie bereits oben beschrieben, bewirkt dieses doppelbrechende oder polarisierende Element unter Veränderung einer geometrischen Phase, die einer optischen Welle pro Resonatorumlauf eine Phasenverzögerung aufprägt, für die Phasen- und Gruppenumlaufzeit in dem Resonator eine unterschiedliche Verzögerung. Dies kann derart geschehen, dass bei der Veränderung des einstellbaren Elements die Umlaufverluste eines Laserpulses im Resonator nicht oder nicht wesentlich verändert werden.

Darunter, dass die Umlaufverluste eines Laserpulses im Resonator nicht bzw. "nicht wesentlich" verändert werden, kann im Sinne der vorliegenden Anmeldung verstanden werden, dass die Umlaufverluste der Laserstrahlung im Resonator vollkommen konstant bleiben oder um weniger als 0,1%, um weniger als 0,5%, um weniger als 1%, um weniger als 2%, um weniger als 5%, um weniger als 10% verändert werden.

Dass das mindestens eine doppelbrechende oder polarisierende Element einstellbar ist, kann insbesondere heißen, dass seine Orientierung veränderlich ist. Dazu kann z.B. ein Stellelement vorgesehen sein. Das doppelbrechende oder polarisierende Element kann allerdings auch elektrisch ansteuerbar und dadurch einstellbar sein. Es kann z.B. durch Anlegen eines elektrischen Signals die polarisierende Wirkung des doppelbrechenden Elements oder des polarisierenden Elements veränderlich sein. Insbesondere kann durch Anlegen eines elektrischen Signals der Einfluss des doppelbrechenden oder des polarisierenden Elements auf die Polarisationsrichtung von Laserstrahlung oder insbesondere von Laserpulsen veränderlich sein.

Als besonders vorteilhaft hat es sich erwiesen, die Orientierung der Doppelbrechung des doppelbrechenden Elements zu ändern oder das doppelbrechende oder polarisierende Element zu rotieren. Insbesondere kann eine solche Rotation um eine Achse parallel zur Ausbreitungsrichtung des Laserlichts, z.B. um die optische Achse des Resonators oder des Elements selbst erfolgen. Die optische Achse des Resonators kann dabei dem Pfad entsprechen, der von der in dem Resonator umlaufenden Laserstrahlung zurückgelegt wird. Durch das Verändern der Orientierung der Doppelbrechung bzw. durch die Rotation des doppelbrechenden oder polarisierenden Elementes kann die Phasen- und/oder Gruppenlaufzeitverzögerung verändert werden.

Besonders vorteilhaft kann es dabei sein, dass die Veränderung der Phasenumlaufzeit der Trägerwelle des Laserpulses die Gruppenumlaufzeit des Pulses nicht oder "nicht wesentlich" (im Sinne der oben angegebenen prozentualen Abweichungen) ändert.

Bei Vorliegen eines Frequenzkamms erlaubt dies ein Verändern oder Regeln bzw. Anpassen der Offset-Frequenz des Frequenzkamms, ohne den Abstand benachbarter Moden zu beeinträchtigen oder zu beeinflussen. Dabei ist eine separate Steuerung der Offset-Frequenz gegeben. Selbstverständlich kann eine solche Anordnung mit einer Vorrichtung kombiniert werden, die das separate Anpassen des Abstands benachbarter Moden ermöglicht. Dies kann z.B. dadurch erreicht werden, dass die Resonatorlänge veränderlich ist. So kann beispielsweise ein verschiebbarer, insbesondere piezoelektrisch verschiebbarer, Endspiegel des Resonators oder ein elektrooptisches Element vorgesehen sein.

Für viele Anwendungen ist es sinnvoll, in dem Resonator ein aktives Medium, insbesondere ein laseraktives Medium vorzusehen. Dadurch kann die in dem Resonator umlaufende Laserstrahlung verstärkt werden. Darüber hinaus kann der Resonator ein Element zum Erzeugen modengekoppelter Laserpulse umfassen, z.B. eine Kerr-Linse , einen sättigbaren Absorber, oder eine NOLM Schleife.

Eine erfindungsgemäße Resonatoranordnung kann weiterhin eine Stelleinrichtung (60) aufweisen, die zum Verändern der Differenz von Phasen- und Gruppenlaufzeitverzögerung im Resonator konfiguriert ist. Dazu kann die Stelleinrichtung (60) dazu konfiguriert sein, das mindestens eine einstellbare doppelbrechende oder polarisierende Element einzustellen. Insbesondere kann dies dadurch geschehen, dass die räumliche Orientierung des doppelbrechenden oder polarisierenden Elements durch die Stelleinrichtung (60) verändert wird. Diese Veränderung kann insbesondere eine Rotation um die optische Achse des Resonators umfassen. Es ist auch denkbar, dass die Stelleinrichtung (60) ein Signal, z.B. ein elektrisches Signal, verwendet, um die Polarisationseigenschaften des einstellbaren doppelbrechenden oder polarisierenden Elements zu verändern, ohne dessen räumliche Orientierung zu verändern. Dies kann z.B. sinnvoll sein, wenn das doppelbrechende oder polarisierende Element durch den elektrooptischen Effekt einstellbar ist. Auch bei einer Ausbildung des doppelbrechenden oder polarisierenden Elements als Flüssigkristall, insbesondere als ferroelektrischer Flüssigkristall, kann eine solche Ansteuerung implementiert werden. Alternativ können die Polarisationseigenschaften des doppelbrechenden oder polarisierenden Elements durch mechanischen Druck auf dasselbe veränderlich sein. Auch hier kann eine geeignete Stelleinrichtung (60) vorgesehen sein.

Die Resonatoreinrichtung kann weiterhin eine Steuereinrichtung (80) aufweisen, die zum Senden eines Steuersignals an die Stelleinrichtung (60) konfiguriert ist. Es ist außerdem eine Messeinrichtung 90 zum Bestimmen der Offsetfrequenz $f_0$ vorgesehen. So kann das Steuersignal abhängig von der von der Messeinrichtung 90 bestimmten Offsetfrequenz generiert werden. So kann eine Regelung der Offsetfrequenz implementiert werden.

Besonders vorteilhaft ist es, wenn es sich bei dem doppelbrechenden oder polarisierenden Element um ein Verzögerungselement mit einer Phasendifferenz von $\pi$ oder $\pi$-halbe handelt, insbesondere eine Halb- oder Viertel-Wellenplatte bezogen auf die Wellenlänge der Trägerwelle. Solche optischen Elemente haben beispielsweise über eine Rotation um die optische Achse des Resonators veränderliche Polarisationseigenschaften. Bei der erfindungsgemäßen Resonatoranordnung kann es sich um eine Freistrahloptik handeln. Alternativ kann eine solche Resonatoranordnung auch ganz oder zumindest teilweise in einem Wellenleiter 35 ausgebildet sein. Insbesondere das doppelbrechende oder polarisierende Element kann mit elektrooptischem Material in einem Wellenleiter 35 ausgebildet sein.

Es ist außerdem in einigen Ausführungsformen vorgesehen, dass nicht nur ein einstellbares doppelbrechendes Element und/oder ein polarisierendes Element in dem Resonator vorgesehen ist, sondern eine Vielzahl einstellbarer doppelbrechender Elemente und/oder polarisierender Elemente vorhanden sind. Dabei kann es sich um identische einstellbare polarisierende Elemente handeln. Insbesondere kann es vorteilhaft sein, wenn die Vielzahl von doppelbrechenden und/oder polarisierenden Elementen separat einstellbar sind. Es kann für jedes der Vielzahl einstellbarer doppelbrechender und/oder polarisierender Elemente ein separates Stellelement vorgesehen werden. Alternativ können auch sämtliche doppelbrechenden und/oder polarisierenden Elemente mittels eines Stellelements gemeinsam eingestellt werden. Es kann vorteilhaft sein, ein oder mehrere langsam veränderliche doppelbrechende und/oder polarisierende Elemente und eines oder mehrere schnell einstellbare Elemente bereitzustellen. Die Vielzahl einstellbarer doppelbrechender Elemente und/oder polarisierender Elemente kann in dem Resonator hintereinander angeordnet sein. Alternativ ist es auch denkbar, dass einige nicht einstellbare, also feste doppelbrechende und/oder polarisierende Elemente vorgesehen sind.

Insbesondere kann es vorteilhaft sein, wenn die geometrische Phase, die einer optischen Welle pro Resonatorumlauf eine Phasenverzögerung aufprägt, bzw. die der Trägerwelle eines im Resonator umlaufenden Laserpulses pro Resonatorumlauf durch die geometrische Phase aufgeprägt wird , mit hoher Frequenz modulierbar ist. Dies kann bedeuten, dass die doppelbrechenden und/oder polarisierenden Elemente mit hoher Frequenz einstellbar sind. Zum Beispiel können diese mit einer Frequenz von mehr als 100 kHz einstellbar sein. Dies geht deutlich über die Einstellmöglichkeiten mit bekannten Stellelementen, wie z.B. mechanischen, thermischen Aktuatoren, oder der Einstellung der Pumpleistung hinaus. Bereits bekannte schnellere Stellelemente basieren ausschließlich auf einer Intensitätsmodulation des Lasers.

Weiterhin ist es vorteilhaft, wenn die geometrische Phase kontinuierlich weitergestellt werden kann. Es kann eine stufenlose Regelung der geometrischen Phase und damit der Offset-Frequenz implementiert werden. Insbesondere kann der Frequenzkamm damit um mehr als einen freien Spektralbereich verschoben werden.

In dem Resonator kann zusätzlich ein erstes polarisationsveränderndes Element vorgesehen sein, das dazu konfiguriert ist, einen linear polarisierten Laserpuls zu einem zirkular oder elliptisch polarisierten Laserpuls zu machen. Dadurch kann gewährleistet werden, dass Laserlicht oder ein Laserpuls, wenn er auf das doppelbrechende und/oder polarisierende Element trifft, zirkular oder elliptisch polarisiert ist. Weiterhin kann ein zweites polarisationsveränderndes Element vorgesehen sein, das konfiguriert ist, einen zirkular oder elliptisch polarisierenden Laserpuls zu einem linear polarisierten Laserpuls zu machen. Vorteilhafterweise sind das eine oder die mehreren doppelbrechenden oder polarisierenden Elemente zwischen dem ersten und dem zweiten polarisationsverändernden Element in dem Resonator angeordnet.

Anfangs z. B. linear polarisiertes Laserlicht, bzw. ein linear polarisierter Laserpuls, wird durch das erste polarisationsverändernde Element zirkular oder elliptisch polarisiert, passiert dann das eine oder die mehreren doppelbrechenden oder polarisierenden Elemente und wird daraufhin von dem zweiten polarisationsverändernden Element wiederum linear polarisiert. In einer vorteilhaften Realisierung wird ein Polarisator am Ein- und/oder Ausgang vorgesehen, um kleine Abweichungen von der idealen linearen Polarisation zu unterdrücken. Das verbessert das Polarisationsauslöschungsverhältnis und vermeidet so Intensitätsmodulationen im Spektrum.

Die Ausführung mit einem ersten und einem zweiten polarisationsverändernden Element ist insbesondere in Verbindung mit einem Ringresonator vorteilhaft. Alternativ ist es auch möglich, dass der Resonator ein linearer Resonator ist. Dann kann es ausreichend sein, dass der Resonator ein erstes polarisationsveränderndes Element aufweist. Dieses kann wie das erste polarisationsverändernde Element eines Ringresonators ausgebildet sein. Laserlicht, insbesondere linear polarisiertes Laserlicht, passiert das erste polarisationsverändernde Element und wird durch dieses zirkular oder elliptisch polarisiert. Daraufhin passiert das Laserlicht das eine oder die mehreren doppelbrechenden oder polarisierenden Elemente und wird dann von einem dahinter angeordneten Resonatorendspiegel reflektiert, um das eine oder die mehreren doppelbrechenden oder polarisierenden Elemente wiederum in entgegengesetzter Richtung zu durchqueren. Daraufhin passiert das Laserlicht bzw. der Laserpuls wiederum das erste polarisationsverändernde Element, dieses Mal in entgegengesetzter Richtung. Dadurch wird wieder eine lineare Polarisation erreicht.

In einem so ausgestalteten Resonator wird das eine oder die mehreren doppelbrechenden oder polarisierenden Elemente bei jedem Durchlauf des Resonators zweimal von dem Laserpuls durchlaufen, und zwar jeweils in entgegengesetzter Richtung.

Ein weiterer Aspekt der vorliegenden Erfindung ist die Verwendung eines Phasenschiebers mit zumindest einem in seiner Orientierung veränderlichen doppelbrechenden oder polarisierenden Element zum Einstellen einer Offsetfrequenz $f_0$ eines zu einem den Phasenschieber durchlaufenden Laserpuls korrespondierenden Frequenzkamms. Der Frequenzkamm kann dabei, wie oben beschrieben, durch die Formel $f_m = m * f_{rep} + f_0$ beschrieben werden.

Im Folgenden sollen die Erfindung und ihre Vorteile anhand der Zeichnungen weiter verdeutlicht werden. Dabei zeigen:

**Figur 1 A:** zwei aufeinanderfolgende Laserpulse eines Pulszuges mit der Pulswiederholfrequenz $f_{rep}$ und die dazugehörigen Trägerwellen, wobei auf der Vertikalachse die Zeit und auf der horizontalen Achse das elektrische Feld aufgetragen ist,

**Figur 1 B:** den zu den Laserpulsen aus Figur 1A gehörigen Frequenzkamm, wobei auf der vertikalen Achse die Frequenz und auf der horizontalen Achse die Intensität aufgetragen ist,

**Figur 2:** eine Darstellung des von einem Laserpuls in einem Resonator einer Ausführungsform der Erfindung bei Durchlauf durch den erfindungsgemäßen Phasenschieber zurückgelegten Wegs im Polarisationsraum anhand der Poincaré-Kugel,

**Figur 3:** einen Phasenschieber zum Einsatz in einem Resonator, insbesondere einem Ringresonator gemäß einer Ausführungsform,

**Figur 4:** einen Phasenschieber und einen zugehörigen Reflektor (Resonator-Endspiegel) zum Einsatz in einem Resonator, insbesondere einem linearen Resonator, einer Ausführungsform, oder einem Ringresonator mit Sigma-Arm,

**Figur 5:** eine schematische Darstellung einer Resonator-Anordnung gemäß einer Ausführungsform mit einem Ringresonator,

**Figur 6:** eine Resonatoranordnung 100 gemäß einer Ausführungsform mit einem linearen Resonator,

**Figur 7:** eine schematische Darstellung eines doppelbrechenden Elements zum Einsatz in einem Erfindungsgemäßen Resonator,

**Figur 8:** eine schematische Darstellung eines erfindungsgemäßen Ringresonators,

**Figur 9:** eine schematische Darstellung eines erfindungsgemäßen linearen Resonators,

**Figur 10:** eine schematische Darstellung eines erfindungsgemäßen Resonators in einer Ausführung mit einer optischen Faser,

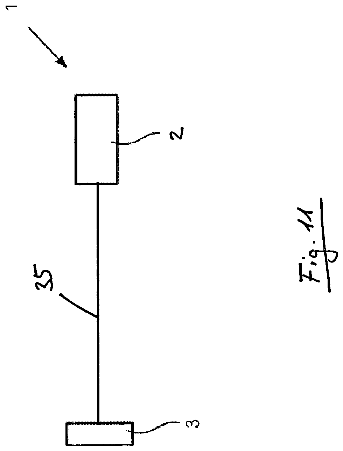

**Figur 11:** eine schematische Darstellung eines Teils eines erfindungsgemäßen Resonators,

**Figur 12:** eine schematische Darstellung eines Teils eines erfindungsgemäßen Resonators mit einer optischen Faser und einem Strahlteiler,

**Figur 13:** eine schematische Darstellung eines Teils eines erfindungsgemäßen Resonators als Freistrahloptik mit einem Strahlteiler,

**Figur 14:** eine schematische Darstellung eines Phasenschiebers mit einem doppelbrechenden oder polarisierenden Element zum Einsatz in einem linearen oder ringförmigen Resonator,

**Figur 15:** eine schematische Darstellung eines Phasenschiebers mit einem doppelbrechenden oder polarisierenden Element zum Einsatz in einem linearen Resonator.

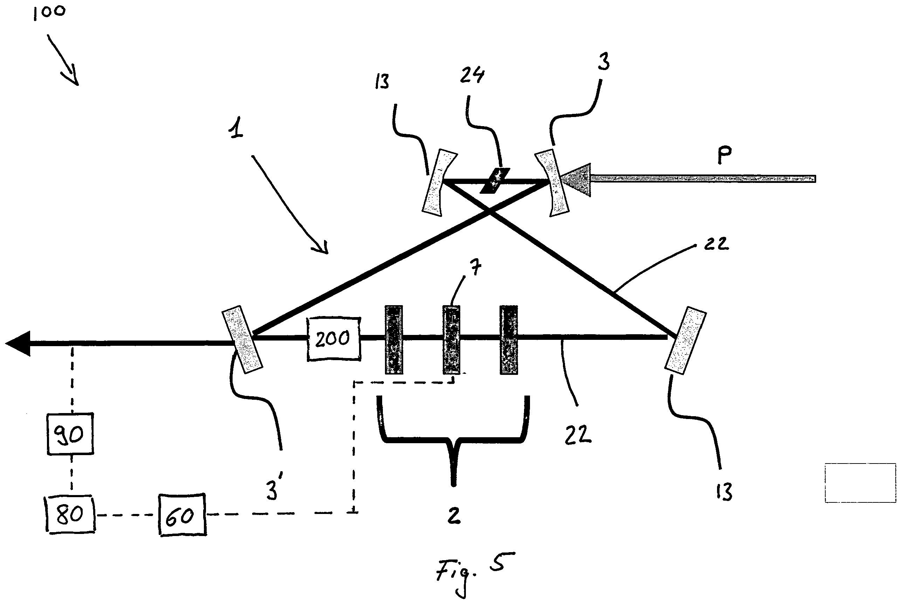

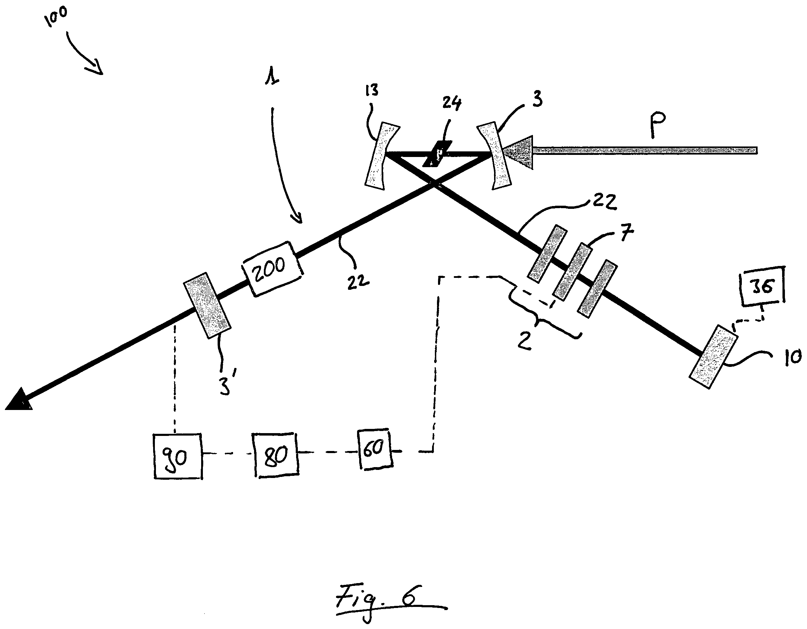

Figur 5 zeigt eine erfindungsgemäße Resonatoranordnung 100 mit einem Resonator 1. Der in Figur 5 gezeigte Resonator ist ein Ringresonator. Alternativ kann eine erfindungsgemäße Resonatoranordnung 100 auch einen linearen Resonator umfassen. Ein solcher ist in Figur 6 gezeigt.

Der Ringresonator 1 aus Figur 5 weist mehrere gekrümmte Spiegel 3, 13 auf. Bei dem Spiegel 3 handelt es sich um einen Einkoppelspiegel, der zum Einkoppeln von Pumplicht P geeignet ist. Der Spiegel 3' ist ein Auskoppelspiegel zum Auskoppeln von Laserlicht aus dem Resonator 1. Dabei kann es sich um CW-Laserlicht (continous wave) oder gepulstes Laserlicht handeln.

Für einige Anwendungen ist es vorteilhaft, in dem Resonator ein aktives Medium 24 vorzusehen. Dabei kann es sich zum Beispiel um ein laseraktives Medium wie einen Ti:Sa-Kristall handeln. Selbstverständlich sind auch andere Lasermedien denkbar. Zur Strahlführung in dem Resonator 1 sind weiterhin Umlenkspiegel 13 vorgesehen. Dabei kann es zweckmäßig sein, wenn einige Spiegel gekrümmt sind. Zum Beispiel zur Dispersionskompensation in dem Resonator 1 kann es vorteilhaft sein, wenn einer der Spiegel, zum Beispiel einer der Spiegel 13, ein gechirpter Spiegel ist.

Das Bezugszeichen 2 in Figur 5 bezeichnet den Phasenschieber des Resonators 1. Dieser ist entlang der optischen Achse 22 des Resonators 1 vorgesehen. Der Phasenschieber 2 umfasst ein einstellbares doppelbrechendes oder polarisierendes Element 7. Insbesondere kann es sich dabei um ein Verzögerungselement mit einer Phasendifferenz von $\pi$ oder $\pi/2$ handeln. Für viele Anwendungen ist insbesondere eine $\lambda/2$-Ptatte besonders vorteilhaft.

Das doppelbrechende oder polarisierende Element 7 kann durch den elektrooptischen Effekt veränderlich sein. Alternativ kann die Polarisationseigenschaft des doppelbrechenden oder polarisierenden Element 7 durch mechanischen Druck einstellbar sein. Bei Element 7 kann es sich auch um einen Flüssigkristall, insbesondere einen ferroelektrischen Flüssigkristall handeln. Je nach Ausführung des Elements 7 kann ein geeignetes Stellelement 60 vorgesehen sein, um das doppelbrechende oder polarisierende Element 7 einzustellen. Einstellen in diesem Sinn bezieht sich auf ein Verändern bzw. Anpassen oder Einstellen auf einen gewünschten Wert der Polarisationseigenschaften des Elements 7. Im Falle einer Wellenplatte kann die Einstellung z.B. durch eine Rotation um die Resonatorachse 22 erfolgen. Darüber hinaus weist Resonator 1 ein Element 200 zum Erzeugen modengekoppelter Laserpulse auf, z.B. eine Kerr-Linse oder einen sättigbaren Absorber oder.

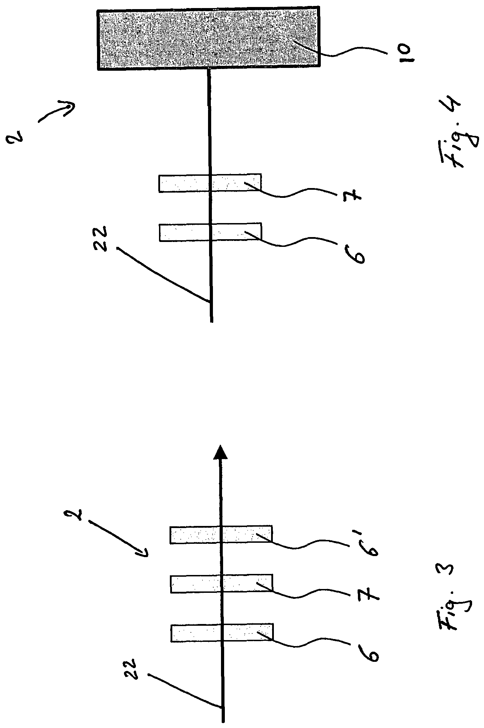

Weiterhin weist der Phasenschieber 2 ein erstes polarisationsveränderndes Element 6 auf. Dieses ist dazu konfiguriert, einen linear polarisierten Laserpuls 110 zirkular oder elliptisch zu polarisieren. Trifft also auf den Phasenschieber 2 in Figur 3 linear polarisiertes Laserlicht von links auf das polarisationsverändernde Element 6, so wird es von diesem zirkular oder elliptisch polarisiert, um dann auf das doppelbrechende oder polarisierende Element 7 zu treffen, wo die Polarisation wiederum verändert wird.

Hinter dem doppelbrechenden oder polarisierenden Element 7 ist auf der dem ersten polarisationsverändernden Element 6 gegenüberliegende Seite ein zweites polarisationsveränderndes Element 6' vorgesehen. Dieses ist dazu konfiguriert, zirkular oder elliptisch polarisiertes Licht linear zu polarisieren. Damit verlässt das Laserlicht den Phasenschieber 2 wieder im linear polarisierten Zustand. Selbstverständlich ist diese Anordnung sowohl für kontinuierliches (CW-) Laserlicht als auch für gepulstes Laserlicht, insbesondere auch für kurze und ultrakurze Pulse anwendbar.

Figur 6 zeigt die Ausführung der erfindungsgemäßen Resonatoranordnung 100 mit linearem Resonator 1. Es sind dabei dieselben Elemente wie in dem in Figur 5 gezeigten Ringresonator vorgesehen. Zur besseren Verdeutlichung werden dieselben Bezugszeichen verwendet. Als Phasenschieber 2 kann ebenfalls der in Figur 3 gezeigte Phasenschieber 2 eingesetzt werden. Im Unterschied zu dem in Figur 5 gezeigten Ringresonator wird dieser allerdings im linearen Resonator pro Resonatorumlauf zweimal durchlaufen.

Sowohl bei der Ausführungsform mit einem Ringresonator als auch bei der Ausführungsform mit einem linearen Resonator können die polarisationsverändernden Elemente 6, 6' im Gegensatz zu dem zumindest einen einstellbaren doppelbrechenden oder polarisierenden Element 7 fest eingestellt sein. Alternativ ist es auch denkbar, auch diese Elemente einstellbar auszugestalten. Dies ist allerdings nicht notwendig. Als besonders vorteilhaft hat es sich erwiesen, wenn es sich bei den polarisationsändernden Elementen 6, 6' um $\lambda/4$-Ptättchen handelt.

Um mit einer geringeren Anzahl optischer Elemente auszukommen und damit Kosten zu sparen, kann in einer besonders günstigen Ausführungsform im Fall eines linearen Resonators auch der in Figur 4 gezeigte Phasenschieber 2 eingesetzt werden. Hier wird der Endspiegel 10 des linearen Resonators in die Anordnung mit eingebunden. Es ist hier lediglich ein polarisationsänderndes Element 6 vorgesehen. Das mindestens eine einstellbare doppelbrechende oder polarisierende Element 7 ist zwischen diesem und dem Endspiegel 10 des Resonators angeordnet. Den Resonator durchlaufendes Licht passiert das polarisationsverändernde Element 6, dann das einstellbare doppelbrechende oder polarisierende Element 7, um dann von dem Resonatorendspiegel 10 reflektiert zu werden und die Elemente 7 und 6 in umgekehrter Reihenfolge und Richtung erneut zu durchlaufen.

Das einstellbare, doppelbrechende oder polarisierende Element 7 kann auch ein A / 4-Plättchen sein. Auch hier ist eine Einstellbarkeit durch eine Rotation um die Resonatorachse 22 denkbar.

Die Resonatoranordnung 100 umfasst ferner eine ansteuerbare Stellvorrichtung 36, die das separate Anpassen des Abstands benachbarter Moden ermöglicht. Dies kann z.B. dadurch erreicht werden, dass die Resonatorlänge veränderlich ist. So kann beispielsweise ein verschiebbarer, insbesondere piezoelektrisch verschiebbarer, Endspiegel 13 des Resonators 1 vorgesehen sein.

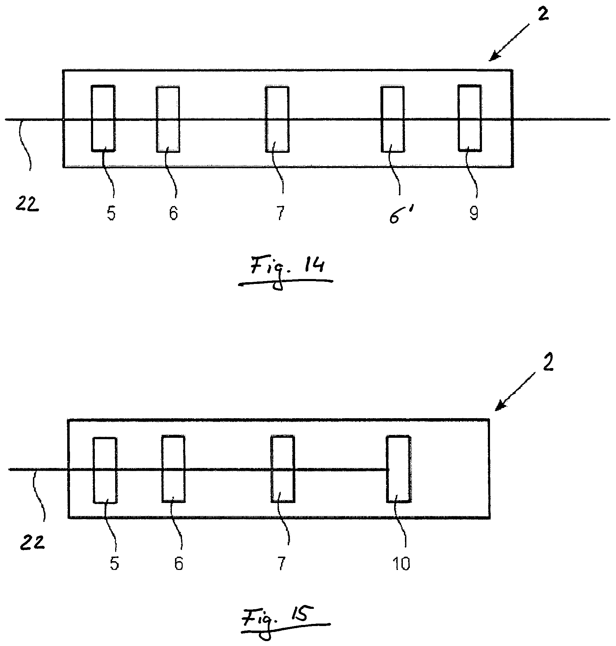

Die Figuren 14 und 15 zeigen weitere Ausführungsformen eines Phasenschiebers 2.

Figur 14 stellt einen Phasenschieber 2 dar, der insbesondere für den Einsatz in einem Ringresonator geeignet ist. Im Unterschied zu dem in Figur 3 gezeigten Phasenschieber sind hier zwei Polarisatoren 5, 9 vorgesehen. Diese sind so angeordnet, dass sie den Aufbau aus Figur 3 einschließen. Diese Polarisatoren sind also am Ein- oder Ausgang des Phasenschiebers 2 angeordnet. Sie dienen dazu, residuelle Abweichungen der Polarisation zu vermeiden. Dies kann sinnvoll sein, da es vorteilhaft ist, wenn das im Resonator umlaufende Laserlicht, bzw. die Laserpulse 110 vor und nach dem Durchlauf des Polarisators identisch polarisiert sind. Da dies aufgrund von Toleranzen der Elemente 6, 6' oder 7 oder anderer Elemente nicht immer gewährleistet ist, können die Polarisatoren 5, 9 eingesetzt werden, um residuelle Abweichungen von der idealen linearen Polarisation zu vermeiden.

Figur 15 zeigt eine ähnliche Anwendung, die insbesondere für den Einsatz in einem linearen Resonator ausgelegt ist. Hier wurde ebenfalls zu dem entsprechenden Phasenschieber 2 aus Figur 5 ein Polarisator 5 hinzugefügt. Dieser befindet sich wie aus Figur 15 ersichtlich an der dem Endspiegel 10 gegenüberliegenden Seite des Phasenschiebers 2 auf der optischen Achse des Resonators. Da dieser Polarisator 5 sowohl beim Eintritt des Laserlichts bzw. der Laserpulse 110 in den Phasenschieber 2 als auch bei dessen Austritt durchlaufen wird, ist hier kein zweiter Polarisator notwendig, sodass auch hier Kosten gespart werden können.

Selbstverständlich können auch mehrere Polarisatoren 5, 9 hintereinander angeordnet werden.

Für einige Verwendungen hat sich ein kaskadierter Aufbau als besonders vorteilhaft erwiesen. Dazu können anstelle des einen doppelbrechenden oder polarisierenden Elements 7 z.B. in den Figuren 3, 4, 14 oder 15 jeweils mehrere doppelbrechende und/oder polarisierende Elemente vorgesehen sein. Diese können dann hintereinander entlang der optischen Achse des Resonators vorgesehen sein. Besonders günstig ist es z.B., wenn eine Vielzahl hintereinander geschalteter einstellbarer $\lambda/2$-Plättchen vorgesehen sind.

Z.B. wenn der Rotationshub eines einzelnen Plättchens z.B. aus mechanischen oder anderen Gründen begrenzt ist, ist ein solcher kaskadierter Aufbau vorteilhaft. Besonders vorteilhaft ist es, wenn jedes der doppelbrechenden oder polarisierenden Elemente 7 separat einstellbar ist. Es ist auch besonders interessant unter diesem Aspekt, unterschiedliche Stellelemente z.B. mit unterschiedlichem Rotationshub und oder unterschiedlicher Stellgeschwindigkeit zu kombinieren. Unter Rotationshub ist hier die Änderung des Polarisationswinkel zu verstehen, der durch das Element 7 erreicht werden kann.

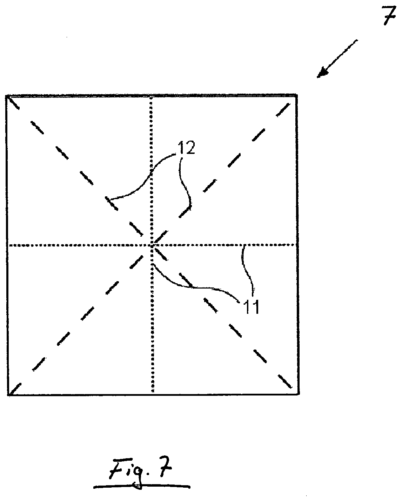

Figur 7 zeigt eine besonders vorteilhafte Ausführungsform des doppelbrechenden oder polarisierenden Elements 7. Hierbei handelt es sich um einen elektrooptischen Modulator, der eine statische, von 0 verschiedene Doppelbrechung bezüglich eines ersten Achsenpaares 11 besitzt. Diese Doppelbrechung und die Achsen 11 können durch die Orientierung des elektrooptischen Modulators festgelegt sein. Der elektrooptische Modulator 7 weist eine zusätzliche induziert Doppelbrechung bezüglich eines weiteren Achsenpaares 12 auf, das sich vom ersten Achsenpaar unterscheidet. Idealerweise können das erste Achsenpaar 11 und das zweite Achsenpaar 12 um 45° zueinander verkippt sein. Die zusätzliche Doppelbrechung bezüglich des weiteren Achsenpaares 12 kann z.B. elektrisch oder mechanisch orientiert und damit einstellbar sein.

In der Literatur beschrieben ist ein Aufbau, in dem mittels genügend hoher Spannung eine rotierbare Halbwellenplatte mit einem 1x1x20mm langen EO-Kristall realisiert wird. Dazu werden zwei elektrische Felder Ex=E0*sin(phi) und Ey=E0*cos(phi) an den Kristall angelegt, wobei E0 das Feld ist, das eine Doppelbrechung mit Phasenverzögerung Pi erzeugt, je nach Wahl der Feldorientierung entlang zweier um 45° gegeneinander verkippter Achsenpaare 11, 12. Trotz der sehr schmalen Apertur (1mm), großer Kristalllänge (20mm) und Nutzung des doppelten Durchgangs wird eine Spannung von ~200V benötigt. Moderne Realisierungen verwenden Waveguides, die kleinere Spannungen verwenden können, aber ebenso hohe Felder benötigen. Bei beiden Realisierungen ist es wegen der hohen Felder schwierig, den Arbeitspunkt stabil zu halten. Für kleine Modulationen lässt sich jedoch der cos(phi)~1 nähern, und sin(phi)=phi. Wenn man nun durch Verkippung des Kristalls (hier Propagationsrichtung ungefähr z-Richtung) eine statische Doppelbrechung in der Größe von Pi erzeugt, so wird nur eine geringe Modulation eines Feldes (hier Ex) benötigt, und Drifts sind beseitigt. Vorteile sind nicht nur Driftarmut, sondern auch geringe Einfügedämpfung (verglichen z.B. mit der Wellenleiter-Lösung).

Obwohl es, also für zumindest einige Ausführungsformen, insbesondere beim Einsatz mit kurzen Laserpulsen 110 und dem dazu korrespondierenden Frequenzkamm, besser ist wenn sich das einstellbare doppelbrechende oder polarisierende Element lediglich auf die geometrische Phase auswirkt, die dem Laserpuls bei einmaligem Durchlauf durch den Resonator aufgeprägt wird, kann es auch vorteilhaft sein, wenn eine verändernde Einstellung des doppelbrechenden oder polarisierenden Elements gleichzeitig eine Laufzeitverzögerung des Laserpulses durch den Resonator bewirkt. Dadurch kann gleichzeitig der Abstand benachbarter Moden des Frequenzkamms im Frequenzraum verändert werden. Es ist z. B. denkbar, dass eine Winkelrotation des einstellbaren doppelbrechenden oder polarisierenden Elements 7 oder mehrere davon gleichzeitig eine Laufzeitverzögerung hervorruft.

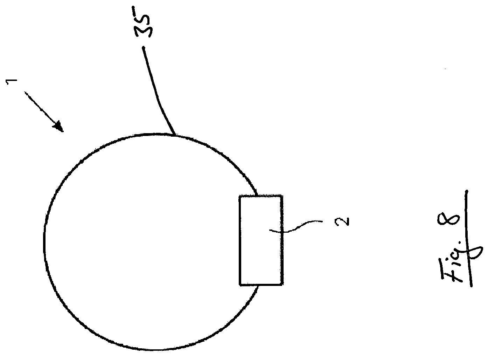

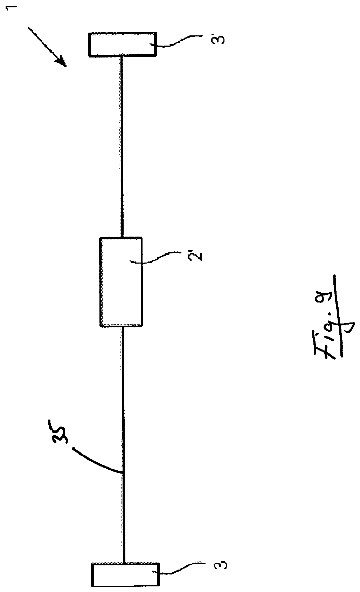

Der erfindungsgemäße Phasenschieber 2 kann auch in Faserlasern eingebaut werden. Dazu ist entweder ein kurzes Freistrahlstück nötig oder es wird eine Wellenleitervariante des Phasenschiebers 2 verwendet. Fig. 8 zeigt auf schematische Art und Weise einen in einer Resonatoranordnung 100 eines Faserlasers eingebauten Phasenschieber 2. Hierbei handelt es sich um eine Ausführung als Ringresonator. In Fig. 9 ist die Implementierung eines erfindungsgemäßen Phasenschiebers 2 in einem Faserlaser mit einem linearen Resonator 1 schematisch dargestellt.

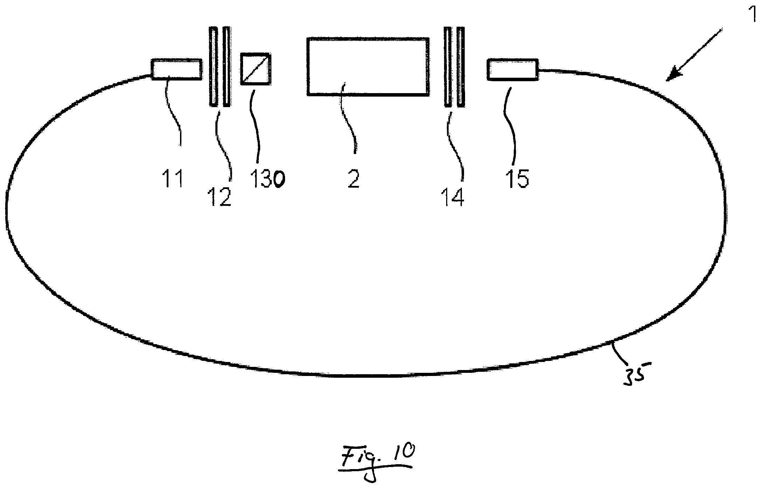

Fig. 10 zeigt schematisch eine Variante, in der der erfindungsgemäße Phasenschieber 2 in den Freistrahlbereich eines Faserlasers mit einem Ringresonator 1 eingebaut ist. Bei den betreffenden Faserlasern kann es sich um dotierte Faserlaser handeln.

Die Elemente 11 und 15 aus Fig. 10 stellen Kollimatoren dar, die das Auskoppeln und das Einkoppeln von Licht in eine entsprechende optische Faser 35 ermöglichen. Bei dem Element 130 handelt es sich um einen Strahlteiler, der zum Auskoppeln von Licht, insbesondere dem Laserlicht oder gepulstem Laserlicht, aus der Resonatoranordnung 100 verwendet wird.

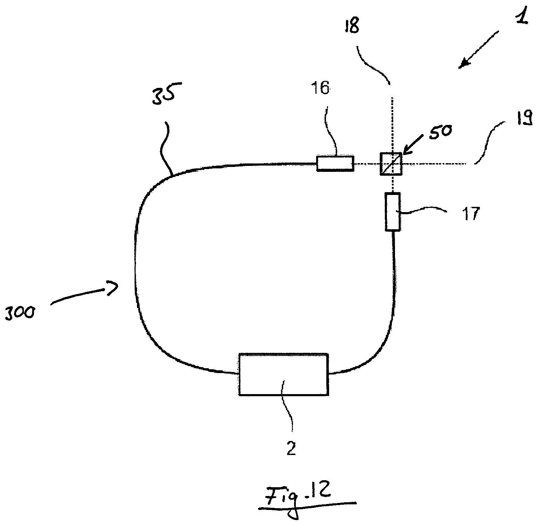

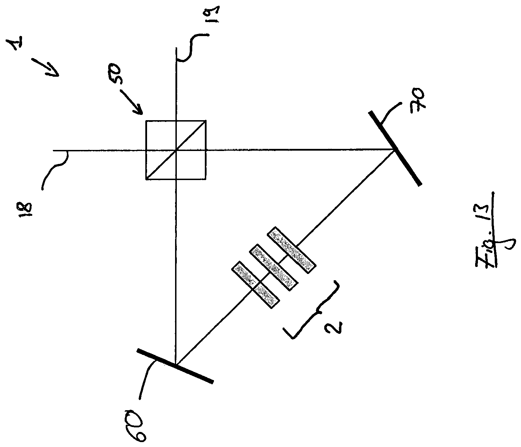

Eine weiter spezialisierte Ausbildung einer erfindungsgemäßen Resonatoranordnung 100 lässt sich durch eine Schleife 300 bzw. einen Schleifenspiegel 300 (loop mirror) in Verbindung mit einem polarisierenden Strahlteiler 50 erreichen. Dadurch wird erreicht, dass die Anordnung unabhängig von der einfallenden Polarisation ist. Fig. 13 zeigt eine solche Anordnung als Freistrahloptik, während in Fig. 12 eine entsprechende Anordnung als Faseroptik dargestellt ist. Port 18 des polarisierenden Strahlteilers 50 dient als Eingang für Laserlicht, insbesondere gepulstes Laserlicht. Bei der in Fig. 12 gezeigten Faseroptik kann von Port 18 Licht in Reflexion über Kollimator 16 in die Faser eingekoppelt werden oder durch Transmission über den Kollimator 17 auf dem entgegengesetzten Ende der Faser eingekoppelt werden. Dies geschieht abhängig von der Polarisation. Da die Kollimatoren 16 bzw. 17 schleifenartig über die Faser, in der sich der Phasenschieber 2 befindet, verbunden sind, laufen in der Faser zwei Polarisationen einander entgegengesetzt durch die Schleife um. Nach Umlauf werden die beiden Polarisationen am Strahlteiler 50 wieder überlagert und verlassen die Anordnung am Port 19 in Transmission oder an Port 18 in einer Reflextion. Dies kann z. B. vom Twist der Fasern abhängen. Bei der Verwendung in Reflexion kann die Kombination mit einem Faraday-Rotator und weiteren Wellenplatten sinnvoll sein, um die Spiegelung der Polarisation aufzuheben.

Bei der in Fig. 13 gezeigten Freistrahloptik dient ebenfalls Port 18 als Eingang in eine Freistrahlschleife, die den Phasenschieber 2 umfasst. Die Schleifenausführung kann, wie in Fig. 13 dargestellt, durch Spiegel 60, 70 realisiert werden. Analog zu der Funktion der in Fig. 12 gezeigten Faserschleife laufen auch hier die beiden Polarisationen einander entgegengesetzt durch die Schleife. Am Strahlteiler werden sie wieder überlagert und verlassen die Anordnung hier je nach Einstellung der $\lambda/4$-Platten am Port 19 in Transmission oder am Port 18 in der Reflexion.

Für sämtliche Ausführungsformen der Erfindung gilt, dass das eine oder die mehreren einstellbaren doppelbrechenden oder polarisierenden Elemente 7,9 als achromatische Wellenplatten ausgebildet sein können. Dadurch ist wiederum gewährleistet, dass durch die Wellenplatten kein Einfluss auf die Gruppengeschwindigkeit eines in dem Resonator umlaufenden Laserpulses vorhanden ist und so die Offset-Frequenz $f_0$ eines zu dem Laserpuls gehörenden Frequenzkamms unabhängig von dem Abstand benachbarter Moden des Frequenzkamms eingestellt werden kann. Chromatische Wellenplatten könnten dazu führen, dass die Gruppenumlaufzeit beim Einstellen der Wellenplatten verändert wird.

Die Erfindung erstreckt sich u.a. auf die folgenden Ausführungsbeispiele:

1. Verfahren zum Betreiben einer Lasereinrichtung mit den Schritten:

a) Bereitstellen eines Laserpulses (10) in einem Resonator (1), so dass der Laserpuls (10) in dem Resonator (1) umläuft, wobei der Laserpuls (10) eine Trägerwelle (12) aufweist,
b) Bestimmen einer Offset-Frequenz $f_0$ des zu dem Laserpuls (10) korrespondierenden Frequenzkamms, wobei der Frequenzkamm eine Vielzahl von Lasermoden $f_m$ mit einem Abstand $f_{rep}$ voneinander aufweist, deren Frequenzen durch die Formel $f_m = m * f_{rep} + f_0$ beschrieben werden können, wobei m eine natürliche Zahl ist, und
c) Verändern der Offset-Frequenz $f_0$ durch Verändern einer geometrischen Phase, die der Trägerwelle (12) des Laserpulses (10) pro Resonatorumlauf aufgeprägt wird.

2. Verfahren gemäß Ausführungsbeispiel 1, **dadurch gekennzeichnet,** dass das Verändern der geometrischen Phase derart erfolgt, dass die Gruppenumlaufzeit des Laserpulses (10) in dem Resonator (1) dadurch nicht verändert wird und somit $f_{rep}$ nicht bzw. nicht wesentlich verändert wird.

3. Resonatoranordnung zur Erzeugung von Laserpulsen (10), wobei die Resonatoranordnung einen Resonator (1), ein aktives Medium (24) und eine Auskoppeleinrichtung (3') zum Auskoppeln von Laserpulsen (10) aus dem Resonator aufweist,
**dadurch gekennzeichnet, dass**
die Resonatoranordnung eine Messeinrichtung zum Bestimmen einer Offsetfrequenz $f_0$ des zu den Laserpulsen (10) korrespondierenden Frequenzkamms aufweist, wobei der Frequenzkamm eine Vielzahl von Lasermoden $f_m$ mit einem Abstand $f_{rep}$ voneinander aufweist, deren Frequenzen durch die Formel $f_m = m * f_{rep} + f_0$ beschrieben werden können, wobei m eine natürliche Zahl ist, und dass innerhalb des Resonators (1) zumindest ein in seiner Orientierung veränderliches doppelbrechendes oder polarisierendes Element (7) derart angeordnet ist, dass bei einer Veränderung der Orientierung des zumindest einen doppelbrechenden oder polarisierenden Elementes (7) die geometrische Phase ($\Delta\varphi$), die der Trägerwelle (12) eines Laserpulses (10) pro Resonatorumlauf aufgeprägt wird, veränderlich ist und dadurch die Offset-Frequenz $f_0$ des zu dem Laserpuls (10) gehörigen Frequenzkammes veränderlich ist.

4. Resonatoranordnung mit einem Resonator (1) zur Aufnahme von Laserstrahlung, insbesondere Laserpulsen, **dadurch gekennzeichnet, dass**
innerhalb des Resonators (1) mindestens ein einstellbares doppelbrechendes oder polarisierendes Element (7) angeordnet ist, welches unter Veränderung einer geometrischen Phase, die einer optischen Welle, insbesondere der Trägerwelle (12) der Laserstrahlung, pro Resonatorumlauf aufgeprägt wird, für die Phasen- und Gruppenumlaufzeit unterschiedliche Verzögerung bewirkt,

und dass bei der Veränderung der Einstellung des einstellbaren doppelbrechenden oder polarisierenden Elements die Umlaufverluste der Laserstrahlung, insbesondere des Laserpulses (10), im Resonator (1) nicht beziehungsweise nicht wesentlich verändert werden.

5. Resonatoranordnung nach Ausführungsbeispiel 4, **dadurch gekennzeichnet, dass** eine Veränderung von Phasen- und/oder Gruppenverzögerung durch Ändern der Orientierung der Doppelbrechung des doppelbrechenden Elements (7) oder durch Rotation des doppelbrechenden oder polarisierenden Elementes (7) um die optische Achse (22) des Resonators (1) erreichbar ist.

6. Resonatoranordnung nach Ausführungsbeispiel 4 oder 5, **dadurch gekennzeichnet, dass** die Polarisation des Laserlichts, insbesondere des Laserpulses (10), an dem zumindest einen doppelbrechenden oder polarisierenden Element (7) zirkular oder im Wesentlichen zirkular ist.

7. Resonatoranordnung nach einem der Ausführungsbeispiele 4 bis 6, **dadurch gekennzeichnet, dass** der Resonator (1) ein aktives Medium (24) und eine Auskoppeleinrichtung (3') besitzt, darüber hinaus über ein Element verfügt, das geeignet ist, in dem Resonator (1) modengekoppelte Laserpulse (10) zu erzeugen.

8. Resonatoranordnung nach einem der Ausführungsbeispiele 4 bis 7, **dadurch gekennzeichnet, dass** der Resonator (1) zur Aufnahme einer Vielzahl von Moden geeignet ist, die durch die Frequenzen $f_m$ charakterisiert sind und im Wesentlichen durch die Formel $f_m = m * f_{rep} + f_0$ beschrieben werden können, wobei $f_{rep}$ der Abstand benachbarter Moden und m eine natürliche Zahl ist,

und dass die Resonatoranordnung eine Messeinrichtung zum Bestimmen der Offset-Frequenz $f_0$ aufweist, welche die Lage der Resonatormoden im Frequenzraum absolut bzw. relativ festlegt,

und dass die Lage der Moden durch das zumindest eine doppelbrechende oder polarisierende Element (7) veränderlich ist.

9. Resonatoranordnung nach einem der Ausführungsbeispiele 4 bis 8, **dadurch gekennzeichnet, dass** die Resonatoranordnung eine Steuereinrichtung aufweist, die zum Senden eines Steuersignals an die Stelleinrichtung konfiguriert ist, wobei das Steuersignal von der von der Messeinrichtung bestimmten Offset-Frequenz abhängig ist.

10. Resonatoranordnung nach einem der Ausführungsbeispiele 4 bis 9, **dadurch gekennzeichnet, dass** es sich bei dem zumindest einen doppelbrechenden oder polarisierenden Element (7) um ein Verzögerungselement mit einer Phasendifferenz von Pi oder Pi/2 handelt, insbesondere um eine Halb- oder Viertel-Wellenplatte, insbesondere um eine achromatische Wellenplatte.

11. Resonatoranordnung nach einem der Ausführungsbeispiele 3 bis 10, **dadurch gekennzeichnet, dass** das zumindest eine doppelbrechende oder polarisierende Element (7) durch den elektrooptischen Effekt oder durch mechanischen Druck eingestellt werden kann, das zumindest eine Element (7) einen Flüssigkristall, insbesondere einen ferroelektrischen Flüssigkristall, umfasst und/oder das zumindest eine Element (7) in einem Wellenleiter mit elektrooptischem Material ausgebildet ist.

12. Resonatoranordnung nach einem der Ausführungsbeispiele 3 bis 11, **dadurch gekennzeichnet, dass** sich die geometrische Phase kontinuierlich weiterstellen und/oder mit hoher Frequenz, insbesondere von 100kHz oder höher, modulieren lässt.

**Patentansprüche**

1. Verfahren zum Betreiben einer Lasereinrichtung mit den Schritten:

a) Bereitstellen eines Laserpulses (110) in einem Resonator (1), so dass der Laserpuls (110) in dem Resonator (1) umläuft, wobei der Laserpuls (110) eine Trägerwelle (120) aufweist,
b) Bestimmen einer Offset-Frequenz $f_0$ des zu dem Laserpuls (110) korrespondierenden Frequenzkamms, wobei der Frequenzkamm eine Vielzahl von Lasermoden $f_m$ mit einem Abstand $f_{rep}$ voneinander aufweist, deren Frequenzen durch die Formel $f_m = m * f_{rep} + f_0$ beschrieben werden können, wobei m eine natürliche Zahl ist, **dadurch gekennzeichnet dass**, das Verfahren folgenden Schritt umfasst:

c) Verändern der Offset-Frequenz $f_0$ durch Verändern einer geometrischen Phase ($\Delta\varphi$), welche der Trägerwelle (120) des Laserpulses (110) pro Resonatorumlauf eine Phasenumlaufverzögerung aufprägt.

2. Verfahren gemäß Anspruch 1, **dadurch gekennzeichnet, dass** das Verändern der geometrischen Phase derart erfolgt, dass die Gruppenumlaufzeit des Laserpulses (110) in dem Resonator (1) dadurch nicht verändert wird und somit $f_{rep}$ nicht bzw. nicht wesentlich verändert wird.

**3.** Verfahren nach Anspruch 1 oder 2, **dadurch gekennzeichnet, dass** das Verändern der geometrischen Phase durch Verändern der Orientierung der Doppelbrechung eines doppelbrechenden Elements (7) und/oder Verändern der Orientierung, insbesondere durch Rotation um die optische Achse (22) des Resonators (1), zumindest eines doppelbrechenden und/oder eines polarisierenden Elements (7) erreicht wird.

**4.** Verfahren nach Anspruch 3, **dadurch gekennzeichnet, dass** die Schritte b) und c) mehrmals hintereinander durchgeführt werden und dabei die Art der Veränderung der Orientierung des doppelbrechenden und/oder des polarisierenden Elements (7) durch die zuletzt gemessene Offset-Frequenz $f_0$ bestimmt wird.

**5.** Verfahren nach Anspruch 3 oder 4, **dadurch gekennzeichnet, dass** vor Auftreffen des Laserpulses (110) auf das doppelbrechende und/oder das polarisierende Element (7) die Polarisation des Laserpulses (110) zu einer elliptischen oder zirkularen Polarisation gemacht wird, so dass der Laserpuls (110) beim Auftreffen auf das doppelbrechende und/oder das polarisierende Element (7) elliptisch oder zirkular polarisiert ist.

**6.** Resonatoranordnung (100) zur Erzeugung von Laserpulsen (110), wobei die Resonatoranordnung (100) einen Resonator (1), ein aktives Medium (24) und eine Auskoppeleinrichtung (3') zum Auskoppeln von Laserpulsen (110) aus dem Resonator aufweist, wobei die Resonatoranordnung (100) eine Messeinrichtung (90) zum Bestimmen einer Offsetfrequenz $f_0$ des zu den Laserpulsen (110) korrespondierenden Frequenzkamms aufweist, wobei der Frequenzkamm eine Vielzahl von Lasermoden $f_m$ mit einem Abstand $f_{rep}$ voneinander aufweist, deren Frequenzen durch die Formel $f_m = m * f_{rep} + f_0$ beschrieben werden können, wobei m eine natürliche Zahl ist, **dadurch gekennzeichnet, dass**
innerhalb des Resonators (1) zumindest ein in seiner Orientierung veränderliches doppelbrechendes oder polarisierendes Element (7) derart angeordnet ist, dass bei einer Veränderung der Orientierung des zumindest einen doppelbrechenden oder polarisierenden Elementes (7) die geometrische Phase ($\Delta\varphi$), die der Trägerwelle (120) eines Laserpulses (110) pro Resonatorumlauf eine Phasenumlaufverzögerung aufprägt, veränderlich ist und dadurch die Offset-Frequenz $f_0$ des zu dem Laserpuls (110) gehörigen Frequenzkammes veränderlich ist.

**7.** Resonatoranordnung (100) mit einem Resonator (1) zur Aufnahme von Laserstrahlung, insbesondere Laserpulsen (110), **dadurch gekennzeichnet, dass**
innerhalb des Resonators (1) mindestens ein einstellbares doppelbrechendes oder polarisierendes Element (7) angeordnet ist, welches unter Veränderung einer geometrischen Phase ($\Delta\varphi$), die einer optischen Welle, insbesondere der Trägerwelle (120) der Laserstrahlung, pro Resonatorumlauf eine Phasenumlaufverzögerung aufprägt, für die Phasen- und Gruppenumlaufzeit unterschiedliche Verzögerung bewirkt, und
dass bei der Veränderung der Einstellung des einstellbaren doppelbrechenden oder polarisierenden Elements die Umlaufverluste der Laserstrahlung, insbesondere des Laserpulses (110), im Resonator (1) nicht beziehungsweise nicht wesentlich verändert werden.

**8.** Resonatoranordnung nach Anspruch 7, **dadurch gekennzeichnet, dass** eine Veränderung von Phasen- und/oder Gruppenverzögerung durch Ändern der Orientierung der Doppelbrechung des doppelbrechenden Elements (7) oder durch Rotation des doppelbrechenden oder polarisierenden Elementes (7) um die optische Achse (22) des Resonators (1) erreichbar ist.

**9.** Resonatoranordnung nach Anspruch 7 oder 8 , **dadurch gekennzeichnet, dass** die Polarisation des Laserlichts, insbesondere des Laserpulses (110), an dem zumindest einen doppelbrechenden oder polarisierenden Element (7) zirkular oder im Wesentlichen zirkular ist.

**10.** Resonatoranordnung einem der Ansprüche 7 bis 9, **dadurch gekennzeichnet, dass** die Veränderung der Phasenumlaufzeit der Trägerwelle (120) des Laserpulses (110) die Gruppenumlaufzeit des Pulses (10) nicht oder nicht wesentlich verändert.

**11.** Resonatoranordnung nach einem der Ansprüche 7 bis 10, **dadurch gekennzeichnet, dass** der Resonator (1) ein aktives Medium (24) und eine Auskoppeleinrichtung (3') besitzt, und darüber hinaus über ein Element (200) verfügt, das geeignet ist, in dem Resonator (1) modengekoppelte Laserpulse (110) zu erzeugen.

**12.** Resonatoranordnung nach einem der Ansprüche 7 bis 11, **dadurch gekennzeichnet, dass**
der Resonator (1) zur Aufnahme einer Vielzahl von Moden geeignet ist, die durch die Frequenzen $f_m$ charakterisiert sind und im Wesentlichen durch die Formel $f_m = m * f_{rep} + f_0$ beschrieben werden können, wobei $f_{rep}$ der Abstand benachbarter Moden und m eine natürliche Zahl ist,
dass die Resonatoranordnung (100) eine Messeinrichtung (90) zum Bestimmen der Offset-Frequenz $f_0$ aufweist, welche die Lage der Resonatormoden im Frequenzraum absolut bzw. relativ festlegt, und

dass die Lage der Moden durch das zumindest eine doppelbrechende oder polarisierende Element (7) veränderlich ist.

13. Resonatoranordnung nach einem der Ansprüche 6 oder 12, **dadurch gekennzeichnet, dass** die Resonatoranordnung (100) eine Stelleinrichtung (60) aufweist, die zum Verändern der Differenz von Phasen- und Gruppenlaufzeitverzögerung im Resonator (1) konfiguriert ist.

14. Resonatoranordnung nach Anspruch 13, **dadurch gekennzeichnet, dass** die Resonatoranordnung (100) eine Steuereinrichtung (80) aufweist, die zum Senden eines Steuersignals an die Stelleinrichtung (60) konfiguriert ist, wobei das Steuersignal von der von der Messeinrichtung (90) bestimmten Offset-Frequenz abhängig ist.

15. Resonatoranordnung nach einem der Ansprüche 6 bis 14, **dadurch gekennzeichnet, dass** es sich bei dem zumindest einen doppelbrechenden oder polarisierenden Element (7) um ein Verzögerungselement mit einer Phasendifferenz von Pi oder Pi/2 handelt, insbesondere um eine Halb- oder Viertel-Wellenplatte.

16. Resonatoranordnung nach einem der Ansprüche 6 bis 15, **dadurch gekennzeichnet, dass** das zumindest eine doppelbrechende oder polarisierende Element (7) durch den elektrooptischen Effekt oder durch mechanischen Druck eingestellt werden kann, das zumindest eine doppelbrechende oder polarisierende Element (7) einen Flüssigkristall, insbesondere einen ferroelektrischen Flüssigkristall, umfasst und/oder das zumindest eine doppelbrechende oder polarisierende Element (7) in einem Wellenleiter (35) mit elektrooptischem Material ausgebildet ist.

17. Resonatoranordnung nach Anspruch 15 oder 16, **dadurch gekennzeichnet, dass** die Orientierungsänderung der Doppelbrechung dadurch erreicht wird, dass ein doppelbrechendes Element (7) so in dem Resonator (1) angeordnet ist, dass sich eine statische Doppelbrechung, welche insbesondere eine Phasenverschiebung von Pi/2 oder von Pi beträgt, entlang eines ersten Achsenpaares (11) ergibt und eine zweite einstellbare Doppelbrechung entlang eines zweiten, nicht-identischen Achsenpaares (12) ergibt.

18. Resonatoranordnung nach einem der Ansprüche 6 bis 17, **dadurch gekennzeichnet, dass** eine Vielzahl einstellbarer doppelbrechender Elemente (7) und/oder polarisierender Elemente (7) in dem Resonator (1) hintereinander angeordnet sind.

19. Resonatoranordnung nach einem der Ansprüche 6 bis 18, **dadurch gekennzeichnet, dass** sich die geometrische Phase kontinuierlich weiterstellen und/oder mit hoher Frequenz (>100kHz) modulieren lässt.

20. Resonatoranordnung nach einem der Ansprüche 6 bis 19, **dadurch gekennzeichnet, dass** in dem Resonator (1) weiterhin ein erstes polarisationsveränderndes Element (6) vorgesehen ist, das dazu konfiguriert ist, einen linear polarisierten Laserpuls (110) zu einem zirkular oder elliptisch polarisierten Laserpuls (10) zu machen, und in dem Resonator (1) weiterhin ein zweites polarisationsveränderndes Element (6'), welches insbesondere einen Polarisator aufweist, vorgesehen ist, das dazu konfiguriert ist, einen zirkular oder elliptisch polarisierten Laserpuls (110) zu einem linear polarisierten Laserpuls (110) zu machen, wobei das zumindest eine doppelbrechende oder polarisierende Element (7) zwischen dem ersten und dem zweiten polarisationsverändernden Element (6, 6') angeordnet ist.

21. Resonatoranordnung nach einem der Ansprüche 6 bis 20, **dadurch gekennzeichnet, dass** das zumindest eine doppelbrechende oder polarisierende Element (7) bei jeden Durchlauf des Resonators (1) zweimal von dem Laserpuls (110) durchlaufen wird, und zwar jeweils in entgegengesetzter Richtung.

22. Resonatoranordnung nach einem der Ansprüche 6 bis 21, **dadurch gekennzeichnet, dass** zusätzlich zur Offset-Frequenz der Modenabstand $f_{rep}$ mit einem eigenen Stellglied einstellbar ist.

23. Verwendung eines Phasenschiebers (2) in einem Resonator, mit zumindest einem in seiner Orientierung veränderlichen doppelbrechenden oder polarisierenden Element (7) zum Einstellen einer Offsetfrequenz $f_0$ eines zu einem den Phasenschieber (2) durchlaufenden Laserpuls (110) korrespondierenden Frequenzkamms, wobei der Frequenzkamm eine Vielzahl von Lasermoden $f_m$ mit einem Abstand $f_{rep}$ voneinander aufweist, deren Frequenzen durch die Formel $f_m = m * f_{rep} + f_0$ beschrieben werden können, wobei m eine natürliche Zahl ist, wobei durch eine Veränderung der Orientierung des zumindest einen doppelbrechenden oder polarisierenden Elements (7) die geometrische Phase ($\Delta\varphi$), die der Trägerwelle (120) des Laserpulses (110) pro Resonatorumlauf eine Phasenumlaufverzögerung aufprägt, verändert wird und dadurch die Offset-Frequenz $f_0$ verändert wird.

**Claims**

1. Method for operating a laser device comprising the steps of:

a) providing a laser pulse (110) in a resonator (1) so that said laser pulse (110) circulates in said resonator (1), said laser pulse (110) having a carrier wave (120),

b) determining an offset frequency $f_0$ of the frequency comb corresponding to said laser pulse (110), said frequency comb having a plurality of laser modes $f_m$ at a distance $f_{rep}$ from one another, the frequencies of which can be described by the formula $f_m = m * f_{rep} + f_0$, m being a natural number, **characterized in that** the method comprises the following step:

c) varying said offset frequency $f_0$ by varying a geometrical phase ($\Delta\varphi$) which imparts a phase circulation delay to said carrier wave (120) of said laser pulse (110) per resonator circulation.

2. Method according to claim 1, **characterized in that** varying said geometric phase is performed such that the group circulation time of said laser pulse (110) in said resonator (1) is thereby not changed and $f_{rep}$ is therefore not or not significantly changed.

3. Method according to claim 1 or 2, **characterized in that** varying the geometric phase is achieved by by varying the orientation of the birefringence of a birefringent element (7) or by varying the orientation, in particular by rotation about the optical axis (22) of said resonator (1), of at least a birefringent and/or a polarizing element (7).

4. Method according to claim 3, **characterized in that** steps b) and c) are repeatedly performed consecutively and the nature of the variation of the orientation of said birefringent and/or said polarizing element (7) is thereby determined from the offset frequency $f_0$ last measured.

5. Method according to claim 3 or 4, **characterized in that** prior to said laser pulse (110) impinging said birefringent and/or said polarizing element (7), the polarization of said laser pulse (110) is turned into an elliptical or circular polarization, so that said laser pulse (110) is elliptically or circularly polarized when impinging said birefringent and/or said polarizing element (7).

6. Resonator arrangement (100) for generating laser pulses (110), wherein said resonator arrangement (100) comprises a resonator (1), an active medium (24) and an outcoupling device (3') for coupling out laser pulses (110) from said resonator, wherein said resonator arrangement (100) comprises a measuring device (90) for determining an offset frequency $f_0$ of the frequency comb corresponding to said laser pulses (110), said frequency comb having a plurality of laser modes $f_m$ at a distance $f_{rep}$ from one another, the frequencies of which can be described by the formula $f_m = m * f_{rep} + f_0$, m being a natural number, **characterized in that** at least one birefringent or polarizing element (7) being variable in its orientation is arranged within said resonator (1) in such a way that with a variation of the orientation of said at least one birefringent or polarizing element (7), the geometric phase ($\Delta\varphi$) which imparts a phase circulation delay to the carrier wave (120) of a laser pulse (110) per resonator circulation is variable and the offset frequency $f_0$ of the frequency comb associated with said laser pulse (110) is thereby variable.

7. Resonator arrangement (100) with a resonator (1) for receiving laser radiation, in particular laser pulses (110), **characterized in that** at least one adjustable birefringent or polarizing element (7) is arranged within said resonator (1), which by varying a geometric phase ($\Delta\varphi$) that imparts a phase circulation delay to an optical wave, in particular to the carrier wave (120) of said laser radiation, per resonator circulation causes a different delay for the phase and group circulation time, and that when varying the setting of said adjustable birefringent or polarizing element, the circulation losses of the laser radiation, in particular of said laser pulse (110), in said resonator (1) are not or not substantially changed.

8. Resonator arrangement according to claim 7, **characterized in that** the phase and/or group delay can be varied by changing the orientation of the birefringence of said birefringent element (7) or by rotating said birefringent or polarizing element (7) about the optical axis (22) of said resonator (1).

9. Resonator arrangement according to claim 7 or 8, **characterized in that** the polarization of said laser light, in particular of said laser pulse (110), at said at least one birefringent or polarizing element (7) is circular or substantially circular.

10. Resonator arrangement according to any one of claims 7 to 9, **characterized in that** the variation of the phase circulation time of said carrier wave (120) of said laser pulse (110) does not or does not substantially change the group circulation time of said pulse (10).

11. Resonator arrangement according to any one of claims 7 to 10, **characterized in that** said resonator (1) comprises an active medium (24) and an outcoupling device (3'), and in addition comprises an element (200) which is adapted to generate mode-coupled laser pulses (110) in said resonator (1).

12. Resonator arrangement according to any one of claims 7 to 11, **characterized in that**
said resonator (1) is adapted to receive a plurality of modes which are **characterized by** the frequencies $f_m$ and can be substantially described by the formula $f_m = m * f_{rep} + f_0$, $f_{rep}$ being the distance of vicinal modes and m a natural number, **in that**
said resonator arrangement (100) comprises a measuring device (90) for determining the offset frequency $f_0$ which determines the position of the resonator modes in the frequencyd omain in absolute or relative terms, and **in that**
the position of said modes is variable by said at least one birefringent or polarizing element (7).

13. Resonator arrangement according to claim 6 or 12, **characterized in that** said resonator arrangement (100) comprises an actuating device (60) that is configured to vary the difference of the phase and group circulation delay in said resonator (1).

14. Resonator arrangement according to claim 13, **characterized in that** said resonator arrangement (100) comprises a control device (80) which is configured to send a control signal to said actuating device (60), wherein said control signal is dependent upon the offset frequency determined by said measuring device (90).

15. Resonator arrangement according to any one of claims 6 to 14, **characterized in that** said at least one birefringent or polarizing element (7) is a delay element with a phase difference of pi or pi/2, in particular a half or quarter wave plate.

16. Resonator arrangement according to any one of claims 6 to 15, **characterized in that** said at least one birefringent or polarizing element (7) can be adjusted by the electro-optic effect or by mechanical pressure, said at least one birefringent or polarizing element (7) comprises a liquid crystal, in particular a ferro-electric liquid crystal, and/or said at least one birefringent or polarizing element (7) is formed in a waveguide (35) with electro-optical material.

17. Resonator arrangement according to claim 15 or 16, **characterized in that** the variation in orientation of the birefringence is achieved **in that** a birefringent element (7) is arranged in said resonator (1) such that a static birefringence, which in particular corresponds to a phase shift of pi/2 or pi, arises along a first pair of axes (11) and a second adjustable birefringence arises along a second non-identical pair of axes (12).

18. Resonator arrangement according to any one of claims 6 to 17, **characterized in that** a plurality of adjustable birefringent elements (7) and/or polarizing elements (7) is arranged consecutively in said resonator (1).

19. Resonator arrangement according to any one of claims 6 to 18, **characterized in that** the geometric phase can continuously be further adjusted and/or modulated with high frequency (>100 kHz).

20. Resonator arrangement according to any one of claims 6 to 19, **characterized in that** a first polarization varying element (6) which is configured to turn a linearly polarized laser pulse (110) into a circularly or elliptically polarized laser pulse (10) and a second polarization varying element (6') which is configured to turn a circularly or elliptically polarized laser pulse (110) into a linearly polarized laser pulse (110) are further provided in said resonator (1), wherein said at least one birefringent or polarizing element (7) is disposed between said first and second polarization varying elements (6, 6'), said second polarization varying element (6') in particular comprising a polarizer

21. Resonator arrangement according to any one of claims 6 to 20, **characterized in that** said at least one birefringent or polarizing element (7) is passed twice by said laser pulse (110) with each passage through said resonator (1), namely in each case in the opposite direction.

22. Resonator arrangement according to any one of claims 6 to 21, **characterized in that** in addition to the offset frequency, the mode distance $f_{rep}$ is adjustable with its own actuator.

23. Use of a phase shifter (2) in a resonator, the pase shifter (2) having at least one birefringent or polarizing element (7) that is variable in its orientation for adjusting an offset frequency $f_0$ of a frequency comb that corresponds to a laser pulse (110) passing through said phase shifter (2), said frequency comb having a plurality of laser modes $f_m$ at a distance $f_{rep}$ from one another, the frequencies of which can be described by the formula $f_m = m * f_{rep} + f_0$, m being a natural number, wherein the geometric phase $(\Delta\varphi)$ which imparts a phase circulation delay to the carrier wave (120) of the laser pulse (110) per resonator circulation is varied by varying the orientation of the at least one birefringent or polarizing element (7), whereby the offset frequency $f_0$ is varied.

**Revendications**

1. Procédé destiné à faire fonctionner un dispositif à laser, comprenant les étapes :

a) fourniture d'une impulsion laser (110) dans un résonateur (1), de manière à ce que l'impulsion laser (110) se propage dans le résonateur (1), l'impulsion laser (110) présentant une onde porteuse (120),

b) détermination d'une fréquence d'offset $f_0$ du peigne de fréquence correspondant à l'impulsion laser (110), le peigne de fréquence présentant un grand nombre de modes laser $f_m$ avec un espacement $f_{rep}$ les uns des autres, dont les fréquences peuvent être décrites par la formule $f_m = m*f_{rep} + f_o$, m étant un nombre naturel,

**caractérisé en ce que** le procédé comprend l'étape suivante consistant à :

c) modifier la fréquence d'offset $f_o$ en modifiant une phase géométrique ($\Delta\varphi$), qui confère à l'onde porteuse (120) de l'impulsion laser (110), par passage dans le résonateur, un retard de propagation de phase.

2. Procédé selon la revendication 1, **caractérisé en ce que** la modification de la phase géométrique est effectuée de manière à ce que le temps de propagation de groupe de l'impulsion laser (110) dans le résonateur (1) n'en soit pas modifié, et qu'en conséquence $f_{rep}$ n'est pas ou n'est pas sensiblement modifiée.

3. Procédé selon la revendication 1 ou la revendication 2, **caractérisé en ce que** la modification de la phase géométrique est obtenue par modification de l'orientation de la biréfringence d'un élément biréfringent (7), et/ou modification de l'orientation, notamment par rotation autour de l'axe optique (22) du résonateur (1), d'au moins un élément (7) biréfringent et/ou polarisant.

4. Procédé selon la revendication 3, **caractérisé en ce que** les étapes b) et c) sont exécutées plusieurs fois à la suite, et le type de la modification de l'orientation de l'élément (7) biréfringent et/ou polarisant est déterminé par la fréquence d'offset $f_o$ mesurée en dernier lieu.

5. Procédé selon la revendication 3 ou la revendication 4, **caractérisé en ce qu'**avant l'impact de l'impulsion laser (110) sur l'élément (7) biréfringent et/ou polarisant, la polarisation de l'impulsion laser (110) est rendue elliptique ou circulaire, de manière à ce que l'impulsion laser (110) lors de l'impact sur l'élément (7) biréfringent et/ou polarisant, soit polarisée de manière elliptique ou circulaire.

6. Agencement de résonateur (100) pour produire des impulsions laser (110), l'agencement de résonateur (100) comprenant un résonateur (1), un milieu actif (24) et un dispositif de découplage de sortie (3') pour assurer la sortie d'impulsions laser (110) du résonateur, l'agencement de résonateur (100) comprenant un dispositif de mesure (90) pour déterminer une fréquence d'offset $f_o$ du peigne de fréquence correspondant aux impulsions laser (110), le peigne de fréquence présentant un grand nombre de modes laser $f_m$ avec un espacement $f_{rep}$ les uns des autres, dont les fréquences peuvent être décrites par la formule $f_m = m*f_{rep} + f_o$, m étant un nombre naturel, **caractérisé en ce qu'**à l'intérieur du résonateur (1) est agencé au moins un élément (7) biréfringent ou polarisant dont l'orientation est susceptible d'être modifiée, de manière telle que dans le cas d'une modification de l'orientation dudit au moins un élément (7) biréfringent ou polarisant, la phase géométrique ($\Delta\varphi$), qui confère à l'onde porteuse (120) de l'impulsion laser (110), par passage dans le résonateur, un retard de propagation de phase, soit modifiée, en permettant ainsi de modifier la fréquence d'offset $f_o$ du peigne de fréquence associé à l'impulsion laser (110).

7. Agencement de résonateur (100) comprenant un résonateur (1) destiné à absorber un rayonnement laser, notamment des impulsions laser (110), **caractérisé** en qu'à l'intérieur du résonateur (1) est agencé au moins un élément (7) biréfringent ou polarisant réglable, qui, par modification d'une phase géométrique ($\Delta\varphi$) conférant à une onde optique, notamment à l'onde porteuse (120) du rayonnement laser, par passage dans le résonateur, un retard de propagation de phase, produit un retard différent pour le temps de propagation de phase et de groupe, et en ce que dans le cas de la modification du réglage de l'élément biréfringent ou polarisant, les pertes de propagation du rayonnement laser, notamment de l'impulsion laser (110), dans le résonateur (1), ne sont pas ou ne sont sensiblement pas modifiées.

8. Agencement de résonateur selon la revendication 7, **caractérisé en ce qu'**une modification du retard de phase et/ou de groupe peut être obtenue par modification de l'orientation de la biréfringence de l'élément biréfringent (7) ou par rotation de l'élément (7) biréfringent ou polarisant autour de l'axe optique (22) du résonateur (1).

9. Agencement de résonateur selon la revendication 7 ou la revendication 8, **caractérisé en ce que** la polarisation de la lumière laser, notamment de l'impulsion laser (110), au niveau dudit au moins un élément (7) biréfringent ou polarisant, est circulaire ou sensiblement circulaire.

10. Agencement de résonateur selon la revendication 7, **caractérisé en ce que** la modification du temps de propagation de phase de l'onde porteuse (120) de l'impulsion laser (110) ne modifie pas ou ne modifie sensiblement pas le temps de propagation de groupe de l'impulsion (110).

11. Agencement de résonateur selon l'une des revendications 7 à 10, **caractérisé en ce que** le résonateur (1) possède un milieu actif (24) et un dispositif de découplage de sortie (3'), et dispose, en outre, d'un élément (200) qui est adapté à produire dans le résonateur (1), des impulsions laser (110) couplées en mode.

12. Agencement de résonateur selon l'une des revendications 7 à 11, **caractérisé**
    **en ce que** le résonateur (1) est adapté à absorber un grand nombre de modes, qui sont **caractérisés par** les fréquences $f_m$, et peuvent être décrits sensiblement par le formule $f_m = m*f_{rep} + f_o$, $f_{rep}$ étant l'espacement de modes voisins et m un nombre naturel,
    **en ce que** l'agencement de résonateur (100) comprend un dispositif de mesure (90) pour déterminer la fréquence d'offset $f_o$, qui fixe de manière absolue ou relative, la position des modes de résonateur dans l'espace de fréquence, et
    **en ce que** la position des modes peut être modifiée par ledit au moins un élément (7) biréfringent ou polarisant.

13. Agencement de résonateur selon l'une des revendications 6 ou 12, **caractérisé en ce que** l'agencement de résonateur (100) présente un dispositif de réglage (60), qui est configuré pour modifier la différence du retard de propagation de phase et de temps de propagation de groupe dans le résonateur (1).

14. Agencement de résonateur selon la revendication 13, **caractérisé en ce que** l'agencement de résonateur (100) comprend un dispositif de commande (80), qui est configuré pour envoyer un signal de commande au dispositif de réglage (60), le signal de commande étant fonction de la fréquence d'offset déterminée par le dispositif de mesure (90).

15. Agencement de résonateur selon l'une des revendications 6 à 14, **caractérisé en ce qu'**il s'agit, concernant ledit au moins un élément (7) biréfringent ou polarisant, d'un élément retardateur avec une différence de phase de pi ou pi/2, notamment d'une lame demi-onde ou quart d'onde.

16. Agencement de résonateur selon l'une des revendications 6 à 15, **caractérisé en ce que** ledit au moins un élément (7) biréfringent ou polarisant peut être réglé par l'effet électro-optique ou par pression mécanique, ledit au moins un élément (7) biréfringent ou polarisant comprend un cristal liquide, notamment un cristal liquide ferroélectrique, et/ou ledit au moins un élément (7) biréfringent ou polarisant est réalisé dans un guide d'onde optique (35) avec un matériau électrooptique.

17. Agencement de résonateur selon la revendication 15 ou la revendication 16, **caractérisé en ce que** la modification d'orientation de la biréfringence est obtenue grâce au fait qu'un élément (7) biréfringent est agencé dans le résonateur (1) de manière à ce qu'il en résulte une biréfringence statique, qui vaut notamment un décalage de phase de pi/2 ou de pi, le long d'une première paire d'axes (11), et une deuxième biréfringence réglable le long d'une deuxième paire d'axes (12) non identique.

18. Agencement de résonateur selon l'une des revendications 6 à 17, **caractérisé en ce qu'**un grand nombre d'éléments (7) biréfringents et/ou d'éléments (7) polarisants réglables sont agencés les uns à la suite des autres dans le résonateur (1).

19. Agencement de résonateur selon l'une des revendications 6 à 18, **caractérisé en ce que** la phase géométrique peut être décalée de manière continuelle et/ou être modulée avec une fréquence élevée (>100kHz).

20. Agencement de résonateur selon l'une des revendications 6 à 19, **caractérisé en ce que** dans le résonateur (1) est, en outre, prévu un premier élément de modification de polarisation (6), qui est configuré pour transformer une impulsion laser (110) de polarisation linéaire en une impulsion laser (10) de polarisation circulaire ou elliptique, et dans le résonateur (1) est, en outre, prévu un deuxième élément de modification de polarisation (6') présentant notamment un polariseur, qui est configuré pour transformer une impulsion laser (110) de polarisation circulaire ou elliptique en une impulsion laser (110) de polarisation linéaire, ledit au moins un élément (7) biréfringent ou polarisant étant agencé entre le premier et le deuxième élément de modification de polarisation (6, 6').

21. Agencement de résonateur selon l'une des revendications 6 à 20, **caractérisé en ce que** ledit au moins un élément (7) biréfringent ou polarisant est traversé deux fois par l'impulsion laser (110) à chaque passage à travers le résonateur (1), et ceci selon une direction respectivement opposée.

22. Agencement de résonateur selon l'une des revendications 6 à 21, **caractérisé en ce qu'**en plus de la fréquence d'offset, l'espacement de modes $f_{rep}$ peut être réglé à l'aide d'un organe de réglage.

23. Utilisation d'un décaleur de phase (2) dans un résonateur, comprenant au moins un élément (7) biréfringent ou polarisant dont l'orientation peut être modifiée, pour régler une fréquence d'offset $f_o$ d'un peigne de fréquence correspondant à une impulsion laser (110) traversant le décaleur de phase (2), le peigne de fréquence présentant un grand nombre de modes laser $f_m$ avec un espacement $f_{rep}$ les uns des autres, dont les fréquences peuvent être décrites par la formule $f_m = m*f_{rep} + f_o$, m étant un nombre naturel, une modification de l'orientation dudit au moins un élément (7) biréfringent ou polarisant produisant une modification de la phase géométrique ($\Delta\varphi$), qui confère à l'onde porteuse (120) de l'impulsion laser (110), par passage dans le résonateur, un retard de propagation de phase, en conduisant ainsi à une modification de la fréquence d'offset $f_o$.

$E(t)$

$t$

110

120

110

120

$\Delta\varphi$

$I(f)$

$f$

$f_0$

$f_{rep}$

$f_m$

a

b

Fig 1

20

Fig. 2

Fig. 3

Fig. 4

EP 3 120 428 B1

Fig. 5

Fig. 6

EP 3 120 428 B1

Fig. 7

Fig. 8

Fig. 9

Fig. 10

Fig. 11

Fig. 12

Fig. 13

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10044404 A1
- DE 102005035173 A1
- DE 19911103 B4
- EP 1372275 B1

- DE 19911103 A1
- EP 1161782 B1
- DE 10044404 C2
- US 20040213302 A1

**In der Beschreibung aufgeführte Nicht-Patentliteratur**

- **D. HUDSON.** Mode-locked fiber laser frequency-controlled with an intracavity electro-optic modulator. *OPTICS LETTERS,* vol. 30 (21
- **X. SHEN.** Electronic control of nonlinear-polarization-rotation mode locking in Yb-doped fiber lasers. *OPTICS LETTERS,* vol. 37 (16

- Elektromagnetismus. **BERGMANN SCHÄFER.** Lehrbuch der Experimentalphysik. vol. 2, 418 ff
- **T.H. CHYBA et al.** Measurement of the Pancharatnam phase for a light beam. *Optics Letters,* vol. 13 (7), 562